# EUROPEAN PATENT APPLICATION

(11) **EP 3 012 228 A1**
(43) Date of publication of application: **27.04.2016**
(21) Application number: 14813283.0
(22) Date of filing: 20.06.2014
(51) Int. Cl.: C02F 1/28, C02F 1/42, C02F 1/44, C02F 1/00

(54) **WATER PURIFICATION CARTRIDGE AND WATER PURIFIER**

(30) Priority: 21.06.2013 JP 2013131084; 27.11.2013 JP 2013245241; 14.03.2014 JP 2014051031
(71) Applicant: Mitsubishi Rayon Co., Ltd., Tokyo 100-8253 (JP)
(72) Inventor: TAKEDA Hatsumi, Toyohashi-shi Aichi 440-8601 (JP); KIMURA Shouzou, Tokyo 100-8253 (JP); ISHIKAWA Takeshi, Tokyo 100-8253 (JP); SANAI Katsuya, Tokyo 100-8253 (JP); ITOU Mikinori, Toyohashi-shi Aichi 440-8601 (JP); MINAGAWA Masakazu, Toyohashi-shi Aichi 440-8601 (JP); DOI Tsuyoshi, 40549 Duesseldorf (DE)
(74) Representative: TBK
(86) International application number: PCT/JP2014/066479
(87) International publication number: WO 2014/204000

(57) **Abstract**

The present invention provides a water purification cartridge attachably and detachably provided in a water purifier, the water purification cartridge comprising: a plurality of single cartridges each provided with a closed-end cylindrical case body; and one or more top wall parts which close upper-end openings of the plurality of single cartridges, wherein the inside of each of the plurality of single cartridges serves as a filtering material housing part, and the plurality of single cartridges are arranged in a lateral direction and attachably and detachably connected.

## Description

### TECHNICAL FIELD

The present invention relates to a water purification cartridge used in a water purifier capable of purifying raw water at one time and a water purifier using the same.

Priority is claimed on Japanese Patent Application No. 2013-131084 filed on June 21, 2013, Japanese Patent Application No. 2013-245241 filed on November 27, 2013, and Japanese Patent Application No. 2014-051031 filed on March 14, 2014, the content of which is incorporated herein by reference.

### BACKGROUND ART

As existing water purifiers, there is known a pitcher type water purifier which is generally used at home, is able to purify a comparatively large amount of raw water up to 1 to 2 L at one time, and is kept in a refrigerator as it is. Here, the pitcher type water purifier includes a spout to a cup. As a water purification cartridge used inside a tank of such a pitcher type water purifier, there is known a replacement type water purification cartridge in which the inside of a casing of the water purification cartridge is defined in the up and down direction and a filter medium such as a porous filter membrane or absorbent is stored in each of two segments respectively disposed at the upper and lower portions (the longitudinal direction) (for example, see Patent Document 1).

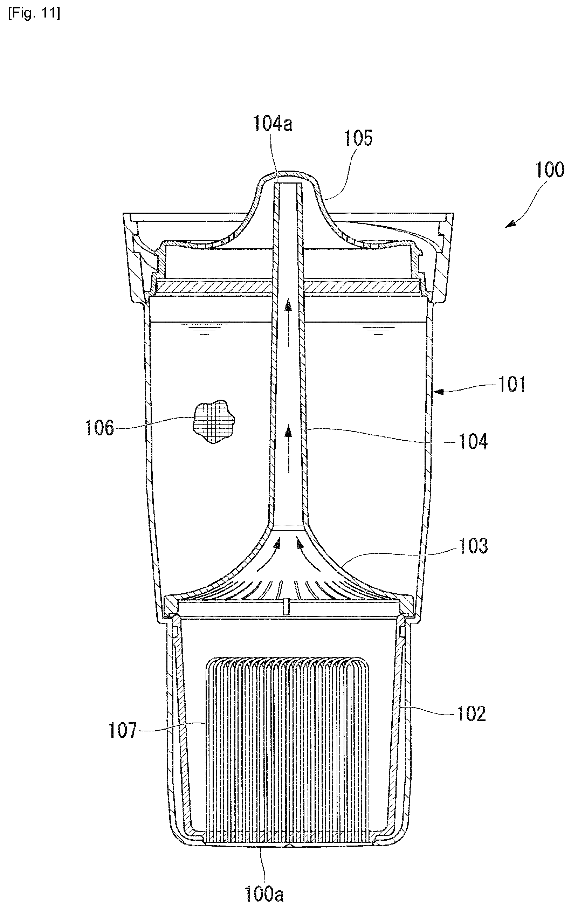

Fig. 11 illustrates a water purification cartridge 100 of Patent Document 1. The water purification cartridge 100 includes an outer casing 101 and an inner casing 102 detachably provided in the lower portion of the outer casing 101. A first filter medium 106 (only a part thereof is illustrated in Fig. 11) is stored inside the outer casing 101, and a second filter medium 107 is stored inside the inner casing 102. Further, the inner casing 102 is provided with a lid 103, and the lid 103 is provided with a slit through which water flows down and a tubular air vent hole 104 which extends upward. Here, an upper end opening 104a of the air vent hole 104 is located near an inner surface of an outer lid 105 of the outer casing 101. In this case, the water purified by the first filter medium 106 passes through the slit of the lid 103, flows into the inner casing 102, passes through the second filter medium 107 stored in the inner casing 102, and flows into a water purifier tank from an outlet 100a of a bottom portion of the cartridge. Then, air generated inside the inner casing 102 is extracted through the air vent hole 104.

### CITATION LIST

### PATENT DOCUMENT

Patent Document 1: US 6,638,426

### DISCLOSURE OF THE INVENTION

### PROBLEM TO BE SOLVED BY THE INVENTION

However, the above-described water purification cartridge of the related art has the following problems.

That is, in the water purification cartridge in which the storage portions of the plurality of filter media are disposed in the longitudinal direction, there is a need to provide the air vent hole dedicated for the air generated in the lower storage portion. For this reason, the cartridge has a complex shape, and the amount of the resin used for the air vent hole increases. As a result, a problem arises in that the cost of the member increases.

Further, when the plurality of filter media is disposed in the longitudinal direction so as to overlap each other, there is a need to separate the entire water purification cartridge from the tank of the water purifier and to replace or clean each filter medium. For that reason, some time is spent for the replacement operation, and a plurality of kinds of filter media having a different life time is replaced generally during one replacement operation. For that reason, there is a room for improvement in that the running cost of the water purification cartridge increases.

Further, the water purification cartridge illustrated in Fig. 11 has the following problems.

That is, the first filter medium 106 is directly stored in the outer casing 101 and is placed on the upper portion of the inner casing 102 attached to the lower portion of the outer casing 101. For that reason, it takes trouble when the first filter medium 106 stored in the outer casing 101 is inserted or extracted directly or the first filter medium 106 is inserted into the outer casing 101. Further, even when only the second filter medium 107 stored in the inner casing 102 is replaced or cleaned, the first filter medium 106 needs to be extracted. For that reason, there is a room for improvement in that the working efficiency for the replacement operation is degraded.

Further, the water purification cartridge of the related art has the following problems.

That is, the outer casing (a container body) 101 and the water purification cartridge are formed of resin, and hence a slight error may occur during a molding operation. Here, for example, a fitting gap of about 0.5 mm is designed in a fitting portion between the container body and the water purification cartridge. For that reason, there is a case in which the fitting between the container body and the water purification cartridge is not sufficient, and hence a problem arises in that a liquid leaks. Meanwhile, when the molding operation is performed without any fitting gap, the attachment and detachment torque of the water purification cartridge with respect to the container body increases. For that reason, there is a room for improvement in that the operability is degraded.

Further, when a sealing member such as a packing or an O-ring is used in the fitting portion between the container body and the water purification cartridge, a problem arises in that the attachment of the sealing member is forgotten, the sealing member is separated, and the cost of the sealing member increases.

The invention is made in view of such circumstances, and an object of the invention is to provide a water purification cartridge and a water purifier capable of having a simple configuration by omitting an air vent hole and decreasing the cost of a member by decreasing the amount of resin.

Further, another object of the invention is to provide a water purification cartridge and a water purifier capable of decreasing running cost by separately replacing and cleaning a filter medium having a different life time.

Further, still another object of the invention is to provide a water purification cartridge and a water purifier capable of efficiently performing a replacement operation by separately replacing and cleaning a filter medium having a different life time with a simple configuration.

Further, still another object of the invention is to provide a water purification cartridge and a water purifier capable of improving the adhesion between a container body and a water purification cartridge at low cost, easily attaching and detaching the water purification cartridge, and improving operability.

### MEANS FOR SOLVING PROBLEM

In order to attain the above-described object, the invention provides the following means.

According to a first aspect of the invention, provided is a water purification cartridge as a water purification cartridge detachably provided inside a water purifier, including a bottomed cylindrical casing body and a ceiling wall portion blocking an opening of the casing body, wherein a plurality of single cartridges is provided so that a filter medium storage portion is formed at the inside thereof and the plurality of single cartridges is disposed in the lateral direction so as to be detachably connected to each other.

In other words, the water purification cartridge according to the first aspect of the invention is a water purification cartridge detachably provided inside a water purifier. Here, the water purification cartridge includes a plurality of single cartridges, each of which includes a bottomed cylindrical casing body and one or more ceiling wall portions which block upper end openings of the plurality of single cartridges, wherein the inside of the plurality of single cartridges becomes a filter medium storage portion, and wherein the plurality of single cartridges is disposed in the lateral direction and is detachably connected to each other.

In addition, the "plurality of single cartridges includes one or more ceiling wall portions" indicate a case where each of the plurality of single cartridges includes the ceiling wall portion and a case where the plurality of single cartridges shares one ceiling wall portion.

Further, a water purifier according to the first aspect of the invention is a water purifier including a container body having a raw water storage portion therein and the above-described water purification cartridge, wherein the plurality of single cartridges is assembled into the container body while being connected to each other in the lateral direction.

In the first aspect of the invention, the plurality of single cartridges is connected to each other in the lateral direction and a different single cartridge is not disposed on each single cartridge. For that reason, the air generated from the filter medium stored in each storage portion can be discharged to the outside of the cartridge in each of the single cartridges.

That is, there is no need to provide the air vent hole which extends upward from the lower cartridge as in the case where the single cartridges are connected to each other in the longitudinal direction (the up and down direction) as in the related art, and hence the water purification cartridge according to the first aspect of the invention has a simple structure instead of a complex shape. Accordingly, the amount of the resin used in the air vent hole can be decreased and hence the cost of the member can be decreased.

In the water purification cartridge according to the first aspect of the invention, since the single cartridges are disposed in the lateral direction, the single cartridges can be easily and separately attached and detached, and hence the filter medium stored in each cartridge can be replaced after the single cartridge is individually separated and extracted. For that reason, even when the filter medium having a different life time is used, it is possible to suppress degradation in utilization efficiency of the filter medium by maximally exhibiting the water purification performance of the filter medium and hence to decrease the running cost of the cartridge.

Further, in the water purification cartridge according to the first aspect of the invention, it is desirable that at least one single cartridge be provided with an air reservoir at the inner surface side of the ceiling wall portion.

In this case, the air generated inside the single cartridge can be effectively accumulated in the air reservoir at the inner surface side of the ceiling wall portion. For that reason, it is possible to prevent degradation in filtering efficiency caused by the air accumulated in the filter medium inside the single cartridge.

Further, in the water purification cartridge according to the first aspect of the invention, it is desirable that the ceiling wall portion of at least one single cartridge be provided with an air vent hole.

In this case, the air generated inside the single cartridge can be efficiently discharged through the air vent hole provided in the ceiling wall portion, and hence the accumulation of the air inside the single cartridge can be prevented.

Further, in the water purification cartridge according to the first aspect of the invention, it is desirable that each of the plurality of single cartridges be provided with the ceiling wall portion and one of the single cartridges connected to each other be provided with a pair of locking pieces nipping the other single cartridge in the left and right direction orthogonal to the connection direction.

With such a configuration, the pair of locking pieces of one single cartridge can be locked to the other single cartridge while the other single cartridge is nipped in the left and right direction. For that reason, it is possible to prevent a positional displacement of the single cartridges connected to each other in the lateral direction (the left and right direction) orthogonal to the connection direction and hence to maintain a stable posture.

Further, in the water purification cartridge according to the first aspect of the invention, it is desirable that a bottom surface of at least one single cartridge excluding the single cartridge located at the most downstream side among the plurality of single cartridges be gradually inclined upward as it goes toward the downstream single cartridge.

With such a configuration, when the bottom surface of the upstream single cartridge is provided with the passage toward the downstream single cartridge, the air inside the passage easily flows toward the downstream single cartridge along the inclined surface since the bottom surface of the single cartridge is inclined upward as it goes toward the downstream side. Accordingly, the accumulation of the air inside the passage can be prevented.

Further, in the water purifier according to the first aspect of the invention, a passage for the water flowing between the single cartridges can be formed between the container body and the bottom surface of the other single cartridge excluding the single cartridge located at the most downstream side and having a purified water outlet among the plurality of single cartridge.

In other words, the water purifier according to the first aspect of the invention is a water purifier including a container body and the above-described water purification cartridge. Here, it is desirable to use the water purifier in which the water purification cartridge is detachably stored in the container body and a passage for water flowing between the single cartridges is formed between the container body and the bottom surface of the other single cartridge excluding the single cartridge located at the most downstream side among the plurality of single cartridges.

In the water purifier according to the first aspect of the invention, the single cartridge does not need to have the passage portion for water flowing between the single cartridges. Accordingly, it is possible to decrease the cost of the member by simplifying the structure of the cartridge.

Further, in the water purifier according to the first aspect of the invention, it is desirable to have a purified water storage portion storing purified water obtained after the water passes through the water purification cartridge.

With such a configuration, most of the cartridges do not protrude toward the purified water storage portion as in the case where the single cartridges are connected to each other in the longitudinal direction as in the related art. For that reason, it is possible to decrease the amount of a portion of the cartridge immersed into the purified water stored in the purified water storage portion. Accordingly, there is an advantage that a decrease in purification speed can be prevented and the elution of the resin used in the cartridge can be decreased.

Further, in the water purifier according to the first aspect of the invention, it is desirable that the container body include a raw water storage portion, the water purification cartridge be detachably stored in the raw water storage portion, and one or more passages for water flowing between the single cartridges be formed between the raw water storage portion and the bottom surface of the other single cartridge excluding the single cartridge located at the most downstream side among the plurality of single cartridges.

In the water purification cartridge according to the first aspect of the invention, the sealing portion increases in size due to the connection structure of the plurality of single cartridges. However, since the water purification cartridge is stored in the raw water storage portion, the raw water can be filtered only by the weight thereof. Accordingly, it is possible to easily maintain the sealing property compared to the pressurization type water purification. Further, it is possible to decrease the cost of the member by simplifying the structure of the cartridge.

According to a second aspect of the invention, provided is a gravity filtering type water purification cartridge including a bottomed cylindrical storage portion and a ceiling wall portion which blocks an opening of the storage portion, wherein a plurality of units storing a filter medium is provided inside the storage portion, and wherein the plurality of units is disposed in parallel in the lateral direction.

In the water purification cartridge according to the second aspect of the invention, it is desirable that the water purification cartridge be detachably provided inside a water purifier and the plurality of units be split units detachably connected to each other.

In other words, the water purification cartridge according to the second aspect of the invention is a water purification cartridge detachably provided inside a water purifier. Here, it is desirable that the water purification cartridge include a plurality of split units, each of which includes a bottomed cylindrical storage portion and in which a filter medium is stored inside the storage portion and a ceiling wall portion which blocks an opening of the storage portion, the plurality of split units being detachably connected to each other.

Further, the water purifier according to the second aspect of the invention is a water purifier including a container body having a raw water storage portion therein and the water purification cartridge according to the second aspect of the invention, and the plurality of split units is assembled while being connected to each other inside the container body.

In the second aspect of the invention, since the plurality of split units is connected to each other, only the upper split unit can be individually separated from the lower split unit while the lower split unit is left inside the water purifier. For that reason, it is possible to easily and separately replace or clean the filter medium having a different life time and hence to efficiently perform the attachment and detachment operation. For example, when only the upper filter medium is replaced or cleaned, only the upper split unit may be separated. Further, even when only the lower filter medium is replaced or cleaned, the lower split unit can be separated after the upper split unit is separated. At this time, a simple structure is obtained in which the filter medium is stored in the split unit and only the split unit can be attached and detached. Accordingly, it is possible to efficiently perform a cleaning operation without taking an effort of extracting the filter medium.

In this way, since it is possible to easily replace the filter medium for each split unit, it is possible to maximally exhibit the water purification performance of the filter medium even when the filter medium having a different life time is used. Accordingly, it is possible to suppress degradation in utilization efficiency of the filter medium and hence to decrease the running cost of the water purification cartridge.

Further, in the water purification cartridge according to the second aspect of the invention, it is desirable that the plurality of split units be connected to each other so that the storage portions are disposed in series in the longitudinal direction.

With such a configuration, since the purified water flowing through the storage portions of the plurality of split units flows from the upstream side toward the downstream side in the longitudinal direction, the purified water can efficiently flow through the filter medium inside each storage portion.

Further, since the plurality of split units can be disposed coaxially in the longitudinal direction, there is an advantage that the assembly structure for connecting both split units is simple.

Further, in the water purification cartridge according to the second aspect of the invention, it is desirable that the plurality of split units be connected to each other so that the storage portions are disposed in parallel in the lateral direction.

In this case, since the storage portions are not disposed so as to overlap each other in the longitudinal direction (the up and down direction) and the upper portions of the storage portions are opened, the air generated in each storage portion can be released toward the upside of the storage portion.

Further, in the water purification cartridge according to the second aspect of the invention, it is desirable that an air reservoir be provided at the inner surface side of the ceiling wall portion.

In this case, since the air generated inside the split unit can be effectively accumulated in the air reservoir at the inner surface side of the ceiling wall portion, it is possible to prevent degradation in filtering efficiency caused by the accumulation of the air in the filter medium inside the split unit.

Further, in the water purification cartridge according to the second aspect of the invention, it is desirable that the ceiling wall portion be provided with an air vent hole.

In this case, the air generated inside the split unit can be efficiently discharged through the air vent hole provided in the ceiling wall portion, and hence the accumulation of the air inside the split unit can be prevented.

Further, in the water purification cartridge according to the second aspect of the invention, a bottom surface of at least one other unit excluding the unit located at the most downstream side among the plurality of units is inclined upward as it goes toward the downstream unit.

With such a configuration, when the bottom surface of the upstream split unit is provided with the passage toward the downstream split unit, the bottom surface of the split unit is inclined upward as it goes toward the downstream side. Accordingly, the air inside the passage can easily flow toward the downstream split unit along the inclined surface, and hence the accumulation of the air inside the passage can be prevented.

Further, the water purifier according to the second aspect of the invention is a water purifier including a water purification cartridge detachably provided inside a water purifier. Here, it is desirable that the water purifier include a plurality of split units, each of which includes a bottomed cylindrical storage portion and in which a filter medium is stored inside the storage portion and a ceiling wall portion which blocks an opening of the storage portion, at least one or more purified water passages for water filtered by the split unit being provided between the container body having a raw water storage portion and the other split unit excluding the split unit located at the most downstream side and having a purified water outlet.

In other words, the water purifier according to the second aspect of the invention is a water purifier including a container body and the above-described water purification cartridge. Here, it is desirable to have a water purifier in which the water purification cartridge is detachably stored in the container body and at least one or more purified water passages for water filtered by the other unit are formed between the container body and the other unit excluding the unit located at the most downstream side among the plurality of units.

According to the water purifier of the second aspect of the invention, since the split unit does not need to have the purified water passage for the water filtered by the split unit, it is possible to simplify the structure of the cartridge and to decrease the cost of the member. In addition, since the plurality of split units is detachably provided in the container body, it is possible to separately replace and clean the filter medium having a different life time and to efficiently perform the replacement operation.

Further, in the water purifier according to the second aspect of the invention, it is desirable that the bottom surface of the other split unit be gradually inclined upward as it goes toward the downstream split unit.

In this case, since the upper surface of the purified water passage formed between the container body and the bottom surface of the other split unit is inclined, the air inside the passage can easily flow toward the downstream split unit along the inclined surface, and hence the accumulation of the air inside the purified water passage can be prevented.

Further, in the water purifier according to the second aspect of the invention, it is desirable that the container body include a raw water storage portion, the water purification cartridge be detachably stored in the raw water storage portion, and one or more purified water passages be formed between the raw water storage portion and the other unit excluding the unit located at the most downstream side among the plurality of units.

In the water purification cartridge according to the second aspect of the invention, the sealing portion increases in size due to the connection structure of the plurality of split units. However, since the water purification cartridge is stored in the raw water storage portion, the raw water can be filtered only by the weight thereof. Accordingly, it is possible to easily maintain the sealing property compared to the pressurization type water purification. Further, it is possible to decrease the cost of the member by simplifying the structure of the cartridge.

A water purification cartridge according to a third aspect of the invention is a water purification cartridge detachably provided in a water purifier, including a raw water inlet and a sealing protrusion protruding outward in the radial direction orthogonal to the axial direction as the attachment and detachment direction, wherein the sealing protrusion is provided in a downstream side wall in relation to the raw water inlet.

Further, the water purifier according to the third aspect of the invention includes the water purification cartridge and a container body to which the water purification cartridge is attachable.

In the third aspect of the invention, when the water purification cartridge is attached to the water purifier, the water purification cartridge is press-inserted into the attachment surface of the water purifier so that the attachment surface and the fitting surface of the side wall of the water purification cartridge come into close contact with each other. Accordingly, the sealing protrusion can liquid-tightly contact the attachment surface. Accordingly, a double seal structure can be realized. That is, since the sealing protrusion is curled upward when the water purification cartridge is press-inserted into the water purifier, a fitting gap therebetween disappears and hence a liquid-tight sealed state is realized.

In this way, in the third aspect of the invention, since the fitting gap caused by the manufacturing error formed between the fitting surface and the attachment surface can be reliably sealed by the sealing protrusion, the leakage between the water purifier and the water purification cartridge can be prevented.

Further, in the water purification cartridge according to the third aspect of the invention, it is desirable that the side wall include a fitting surface fitted to the container body of the water purifier and the sealing protrusion be provided in the fitting surface.

In this case, since the fitting gap caused by the manufacturing error formed between the fitting surface of the side wall and the attachment surface of the container body can be reliably sealed by the sealing protrusion provided in the narrow fitting surface, the leakage between the container body and the water purification cartridge can be prevented. For that reason, the leakage can be reliably prevented even when the fitting shape is different from the circular shape.

Further, since a sealing member such as a packing or an O-ring is not used in the fitting portion between the container body and the water purification cartridge as in the related art, it is possible to prevent the raw water from flowing toward the downstream side due to the separation or the erroneous attachment of the sealing member.

Moreover, since a sealing member is not used in the fitting portion between the container body and the water purification cartridge as in the related art, a decrease in cost can be realized.

In addition, in the third aspect of the invention, since the fitting surface of the water purification cartridge is provided with the sealing protrusion and the water purification cartridge can be repeatedly attached and detached, the sealing member is not replaced and hence the running cost can be decreased.

Further, in the water purification cartridge according to the third aspect of the invention, it is desirable that the sealing protrusion be provided throughout the side wall. Further, it is desirable that the sealing protrusion be continuously provided throughout the side wall. That is, it is desirable that the sealing protrusion be formed in a sheet shape.

In this case, the sealing protrusion is nipped between the fitting surface and the attachment surface while being curled upward as described above in the fitted state. That is, since the side wall is press-inserted while the sealing protrusion is nipped between the side wall and the attachment surface, it is possible to decrease the attachment and detachment torque of the water purification cartridge with respect to the container body and hence to easily perform the attachment and detachment operation.

Further, in the water purification cartridge according to the third aspect of the invention, it is desirable that the sealing protrusion include a portion in which the protrusion length is different in the circumferential direction. That is, it is desirable that the protrusion lengths of the plurality of sealing protrusions be non-uniform in the circumferential direction.

In this case, since the sealing protrusion is formed in an unevenness shape so that the protrusion length of the sealing protrusion changes in the circumferential direction, the sealing protrusion changes in length in the circumferential direction while being curled upward when the water purification cartridge is fitted to the container body. For that reason, since the water purification cartridge fitted to the container body moves up and down, the water purification cartridge can be easily separated from the container body without applying any force.

Further, in the water purification cartridge according to the third aspect of the invention, it is desirable that the side wall be provided with a thinned portion at the inside in the radial direction.

In this case, since the side wall is easily and elastically deformed due to the thin thickness, there is an advantage that the adhesion of the sealing protrusion with respect to the attachment surface can be improved and the water purification cartridge can be easily attached and detached.

Further, in the water purifier according to the invention, it is desirable that the water purification cartridge be attachable to and detachable from the container body in the up and down direction, the container body be provided with an attachment surface to which a fitting surface of the side wall fitted to the container body is press-inserted and a contact portion which contacts and supports the side wall from the downside, and the sealing protrusion liquid-tightly contact the attachment surface while the side wall is brought into contact with the contact portion so that the fitting surface is press-inserted into the attachment surface.

In this case, when the water purification cartridge is attached to the container body, the side wall of the water purification cartridge is brought into contact with the contact portion of the container body so that the fitting surface is press-inserted into the attachment surface. Accordingly, the fitting surface and the attachment surface come into close contact each other, and hence the sealing protrusion liquid-tightly contacts the attachment surface. Accordingly, a double seal structure can be realized. That is, when the water purification cartridge is fitted to the container body so that the fitting surface is press-inserted into the attachment surface downward, the sealing protrusion is curled upward and the side wall is crushed by the contact portion so as to be widened outward in the radial direction. Accordingly, a fitting gap therebetween disappears and hence a liquid-tight sealed state is realized. At this time, the side wall also comes into close contact with the contact portion in addition to the sealing protrusion.

### EFFECT OF THE INVENTION

According to the water purification cartridge and the water purifier of the first aspect of the invention, the air generated from the filter medium can be simply extracted since the air vent hole is not needed and the cost of the member can be decreased since the amount of resin is decreased.

Further, according to the first aspect of the invention, since the single cartridges are connected to each other in the lateral direction, the filter medium having a different life time can be separately replaced and cleaned and the running cost can be decreased.

According to the water purification cartridge and the water purifier of the second aspect of the invention, the air generated from the filter medium can be simply extracted since the air vent hole is not needed and the cost of the member can be decreased since the amount of resin is decreased.

Further, according to the second aspect of the invention, there is an effect that the filter medium having a different life time can be separately replaced and cleaned with a simple configuration and the replacement operation is efficiently performed.

According to the water purification cartridge and the water purifier of the third aspect of the invention, the adhesion between the container body and the water purification cartridge can be improved at low cost, the water purification cartridge can be easily attached and detached, and the operability can be improved.

### BRIEF DESCRIPTION OF DRAWINGS

Fig. 1 is a longitudinal sectional view illustrating a water purifier including a water purification cartridge according to an embodiment of a first aspect of the invention.
Fig. 2 is a perspective view of the water purification cartridge illustrated in Fig. 1.
Fig. 3 is a side view of the water purification cartridge illustrated in Fig. 2.
Fig. 4 is a top view of the water purification cartridge illustrated in Fig. 2.
Fig. 5 is a perspective view illustrating a state where a first single cartridge and a second single cartridge are separated from the water purification cartridge illustrated in Fig. 2.
Fig. 6 is a side view of the water purification cartridge illustrated in Fig. 5.
Fig. 7 is a top view of the water purification cartridge illustrated in Fig. 5.
Fig. 8 is a cross-sectional view taken along the line A-A of Fig. 7 and is a longitudinal sectional view of the water purification cartridge.
Fig. 9 is a longitudinal sectional view illustrating a water purifier with a water purification cartridge according to a first modified example and is a diagram illustrating a state where a first single cartridge is separated.
Fig. 10 is a longitudinal sectional view illustrating a water purifier with a water purification cartridge according to a second modified example.
Fig. 11 is a longitudinal sectional view illustrating the configuration of a water purification cartridge of the related art.

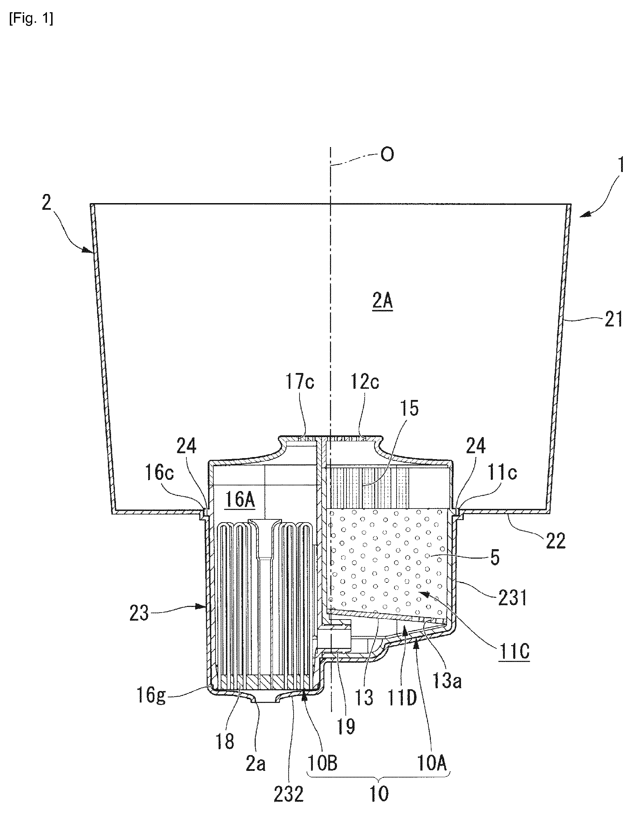

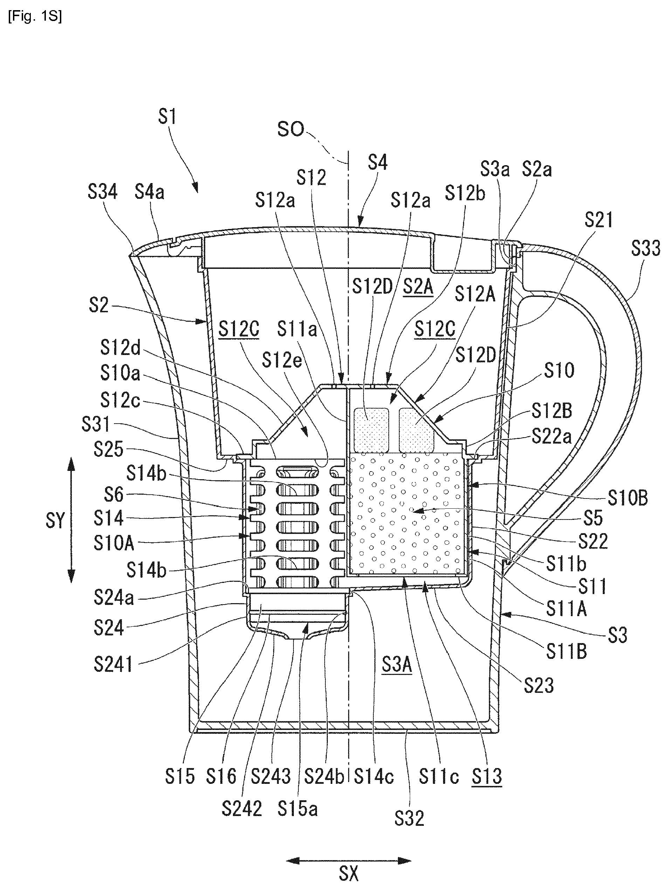

Fig. 1S is a longitudinal sectional view illustrating a water purifier with a water purification cartridge according to a first embodiment of a second aspect of the invention.

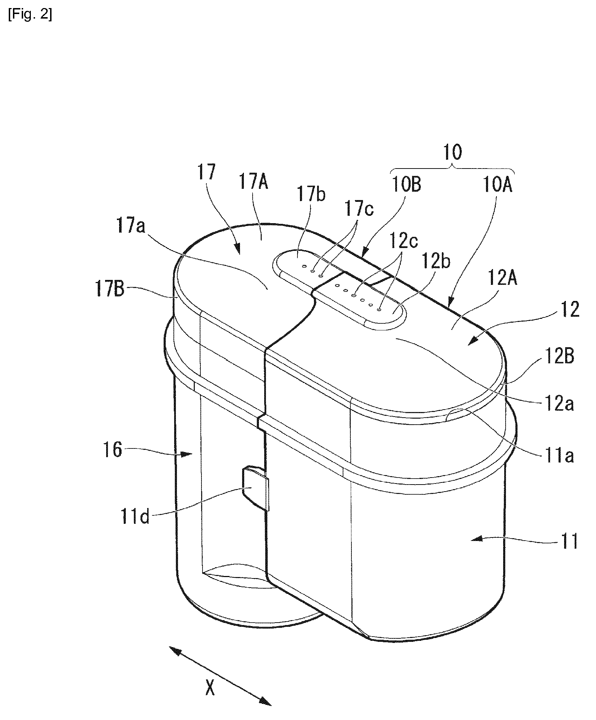

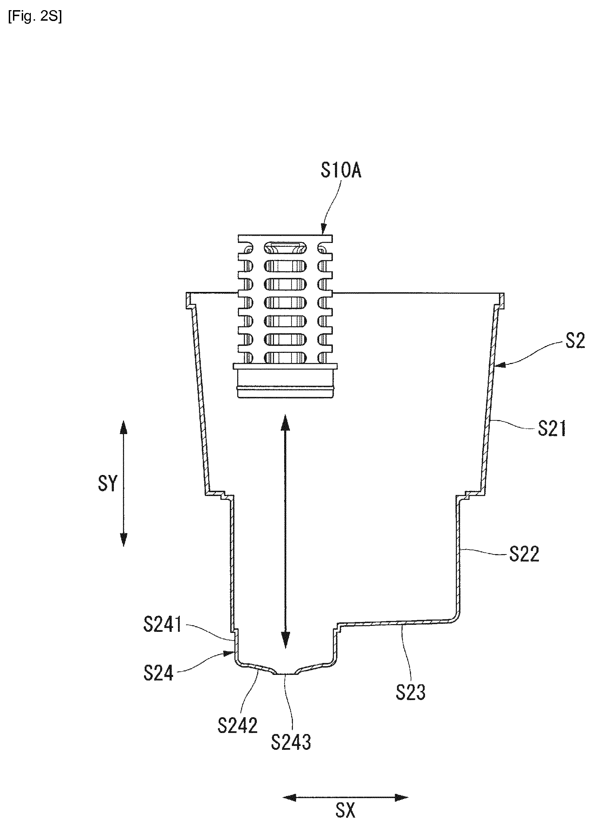

Fig. 2S is a longitudinal sectional view illustrating a state where a first split unit is assembled to a container body.

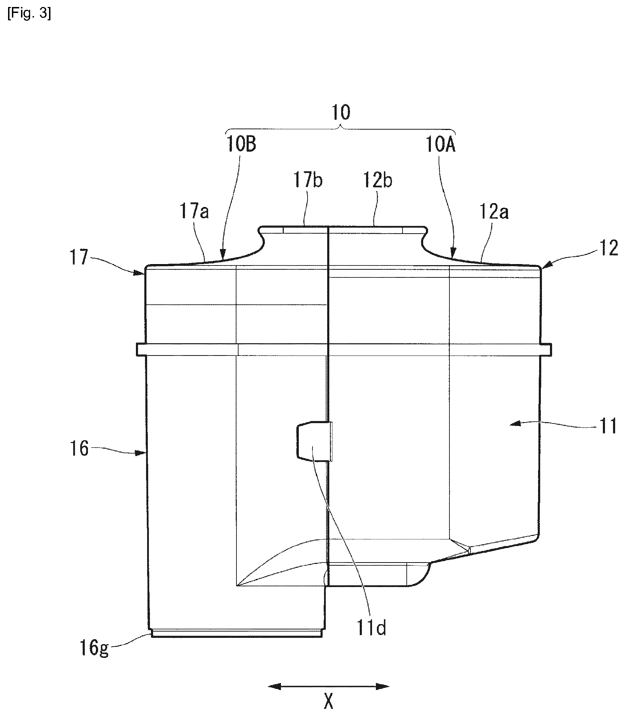

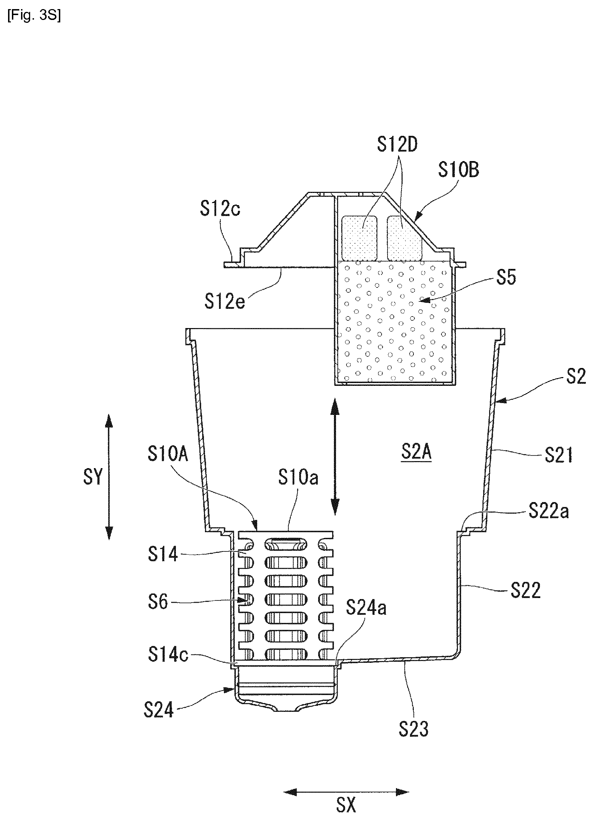

Fig. 3S is a longitudinal sectional view illustrating a step subsequent to Fig. 2S in which a second split unit is assembled to the first split unit.

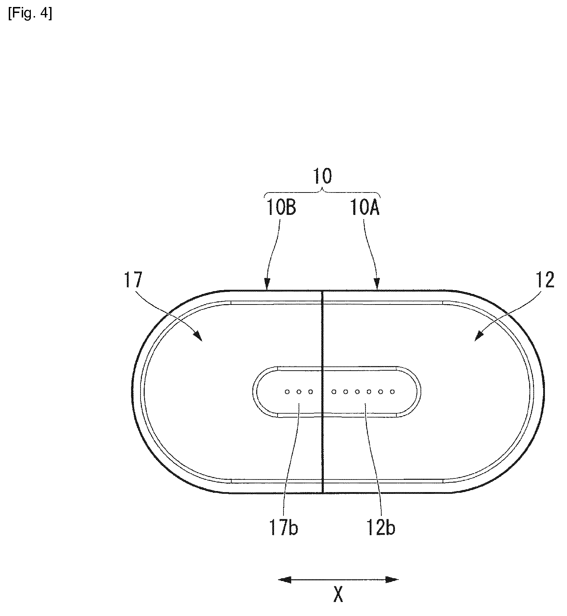

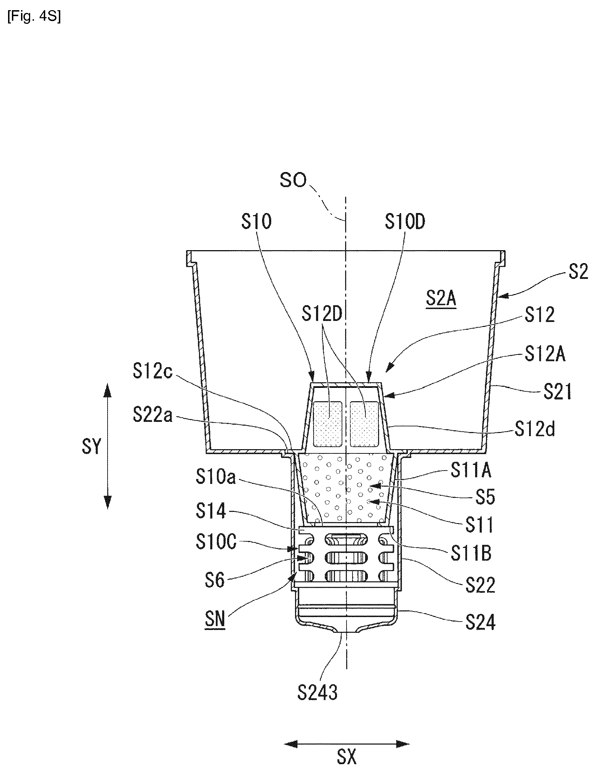

Fig. 4S is a longitudinal sectional view illustrating a water purification cartridge according to a second embodiment of the second aspect of the invention.

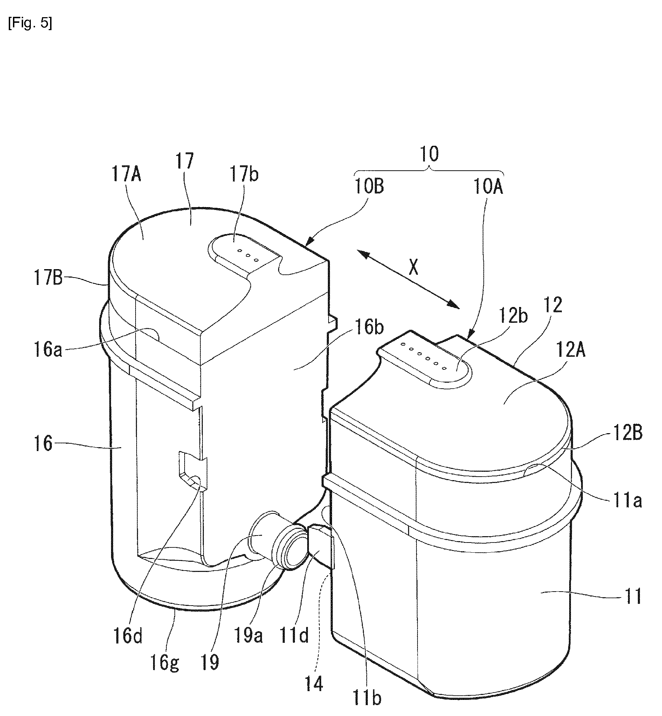

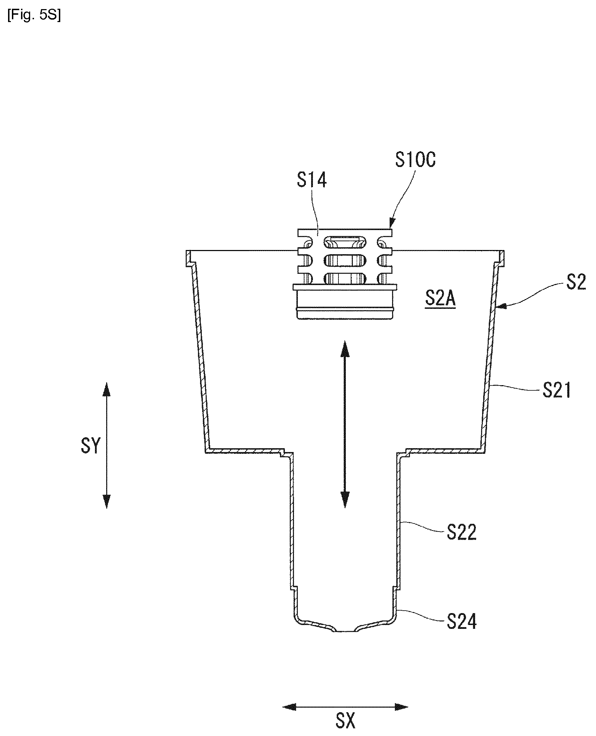

Fig. 5S is a longitudinal sectional view illustrating a state where a first split unit is assembled to a container body.

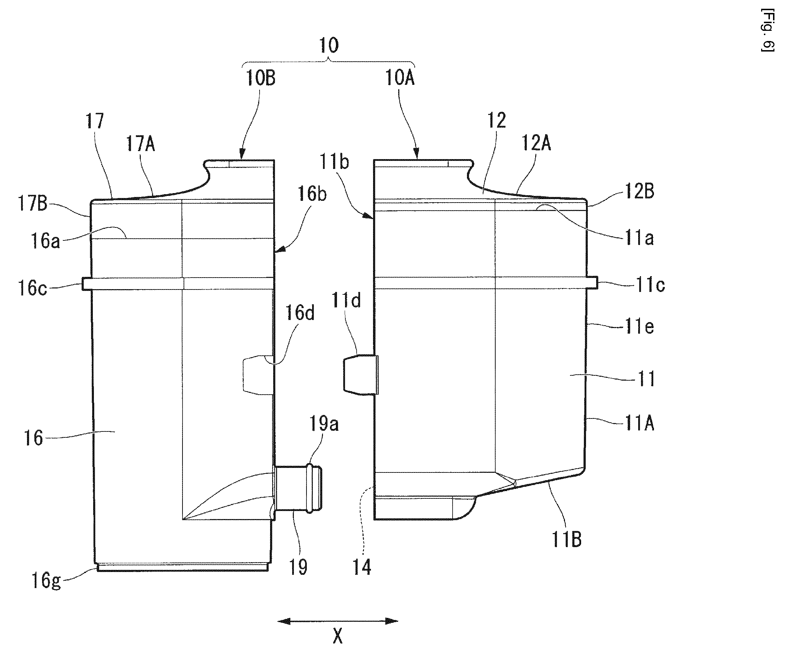

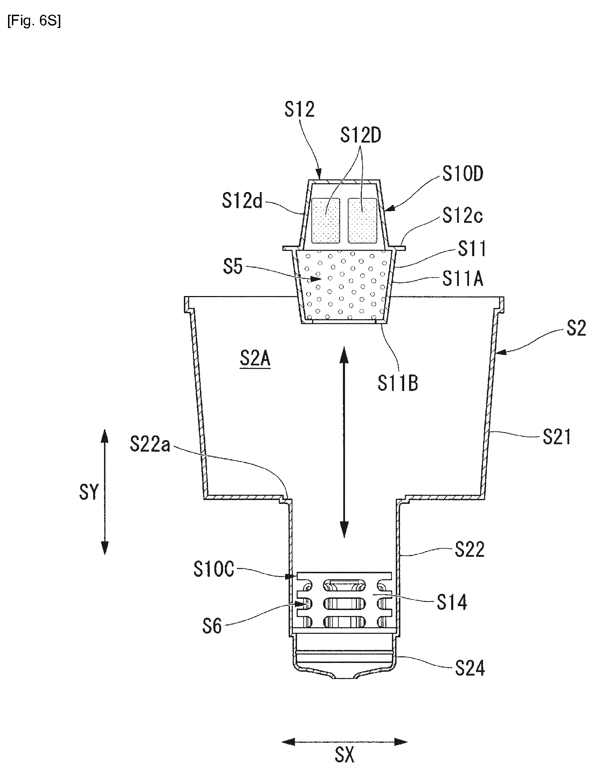

Fig. 6S is a longitudinal sectional view illustrating a step subsequent to Fig. 5S in which a second split unit is assembled to the first split unit.

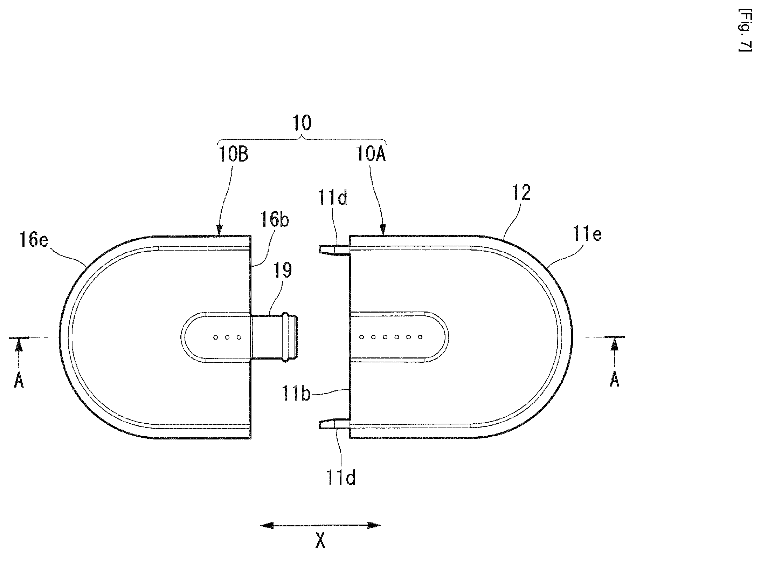

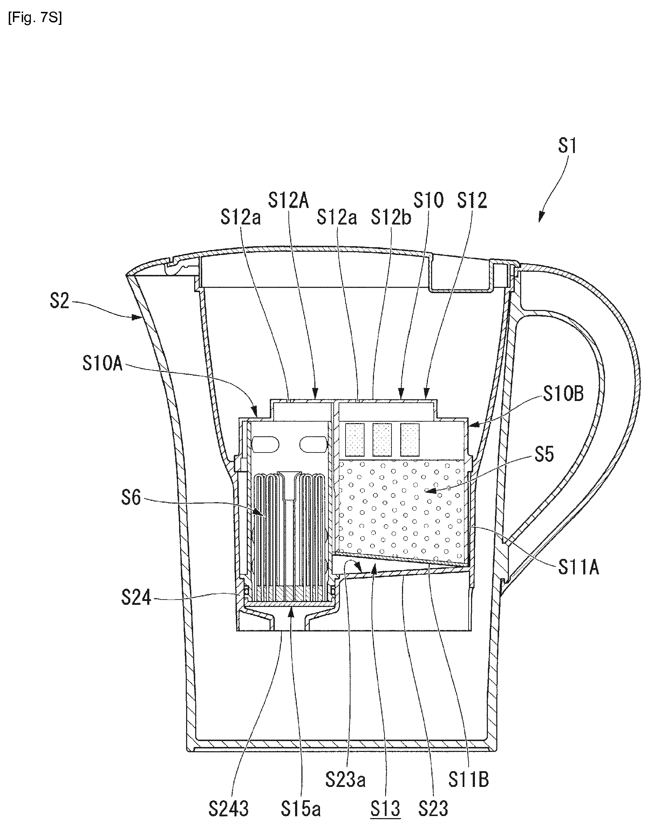

Fig. 7S is a longitudinal sectional view illustrating a water purifier with a water purification cartridge according to a modified example.

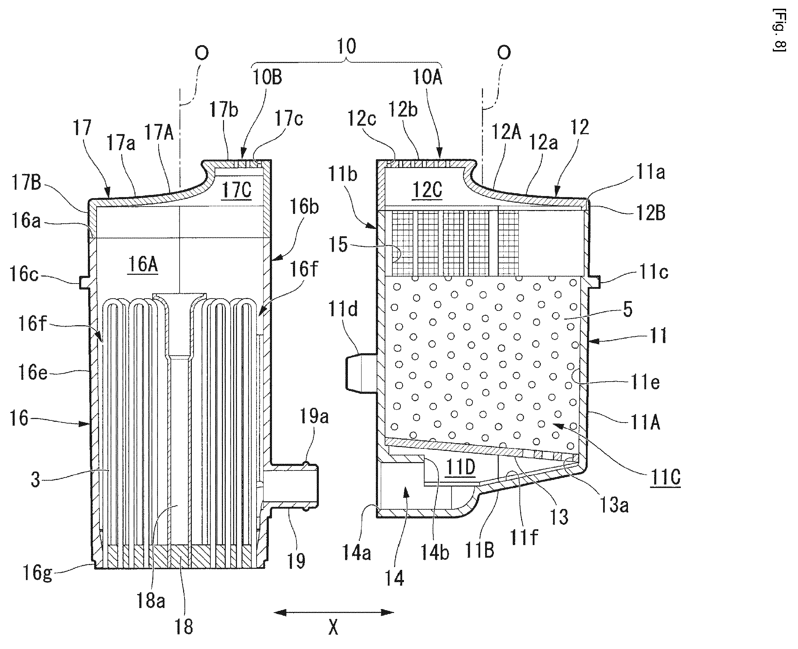

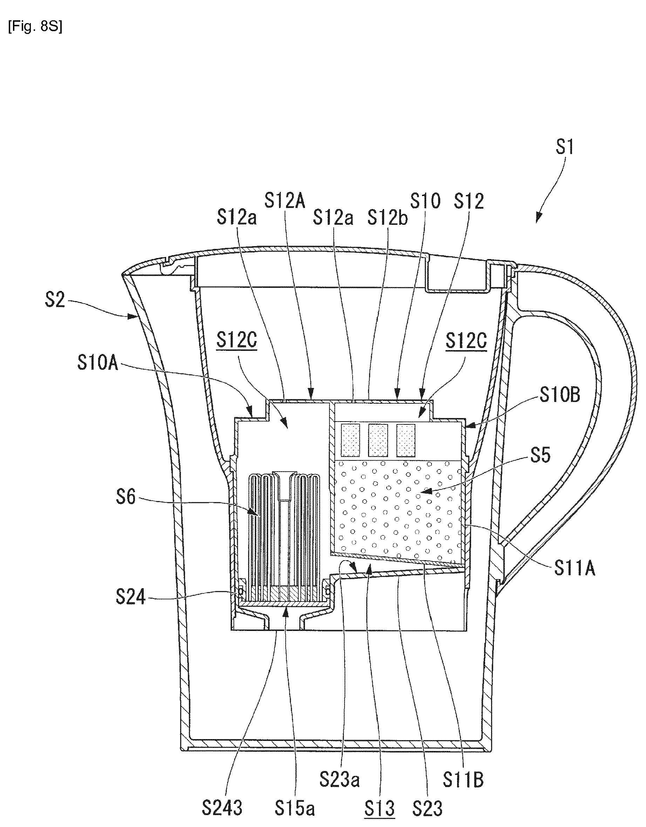

Fig. 8S is a longitudinal sectional view illustrating a water purifier with a water purification cartridge according to a modified example.

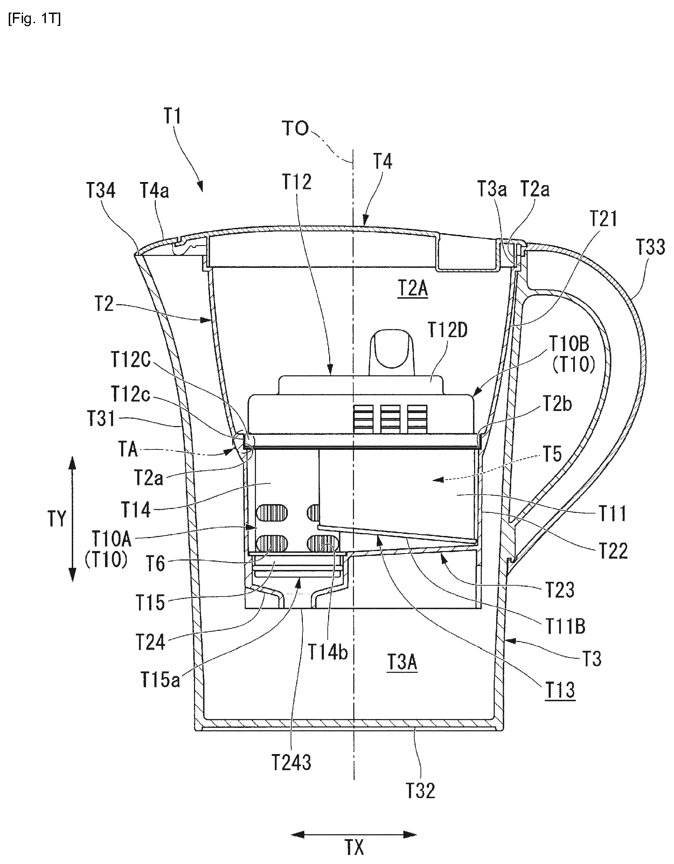

Fig. 1T is a longitudinal sectional view illustrating a water purifier with a water purification cartridge according to a first embodiment of a third aspect of the invention.

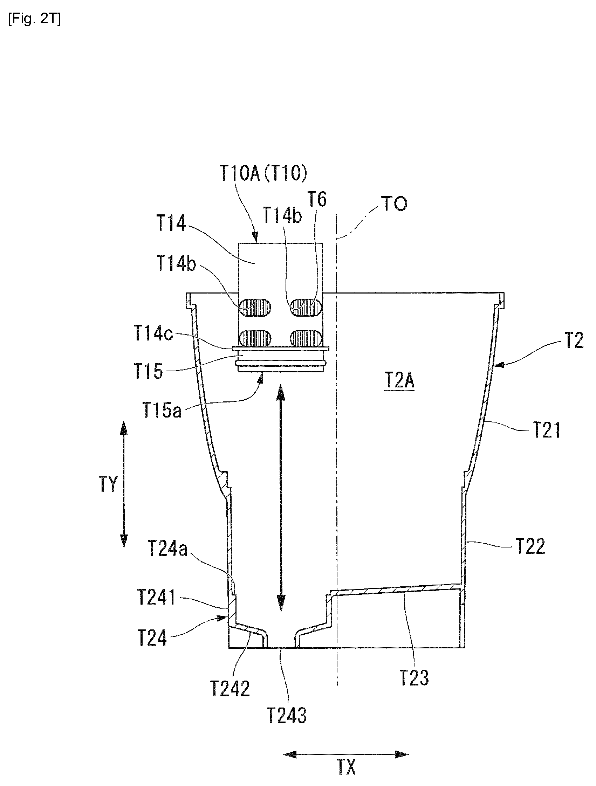

Fig. 2T is a longitudinal sectional view illustrating a state where a first split unit is assembled to a container body.

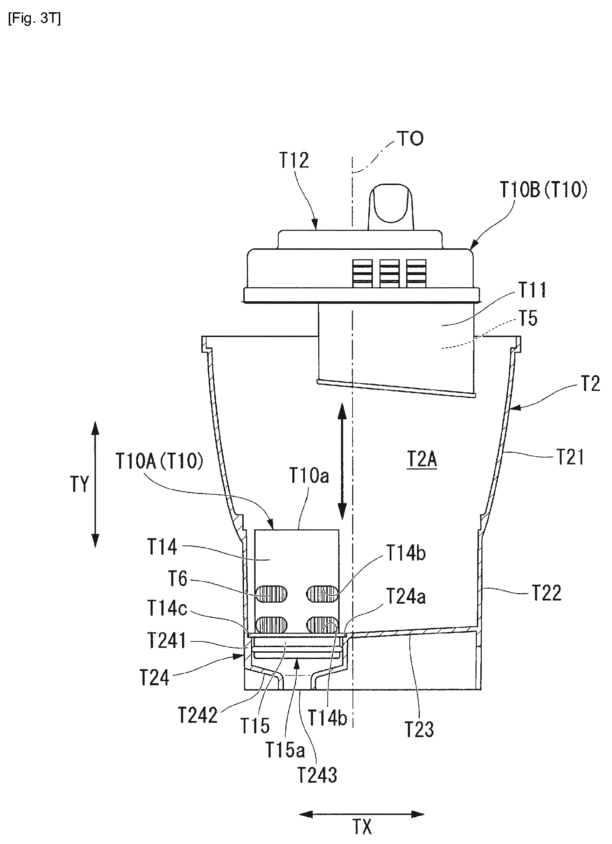

Fig. 3T is a longitudinal sectional view illustrating a state where a second split unit is assembled to the first split unit.

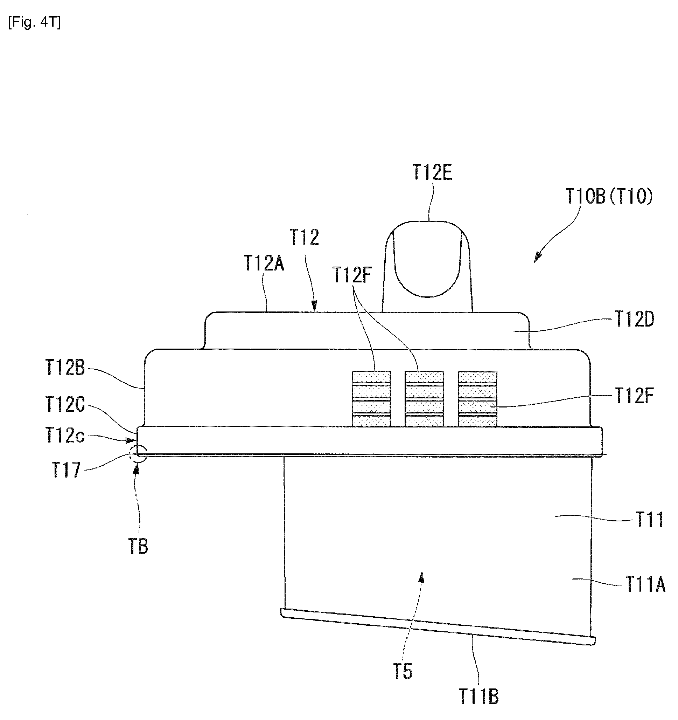

Fig. 4T is a side view illustrating the configuration of the second split unit.

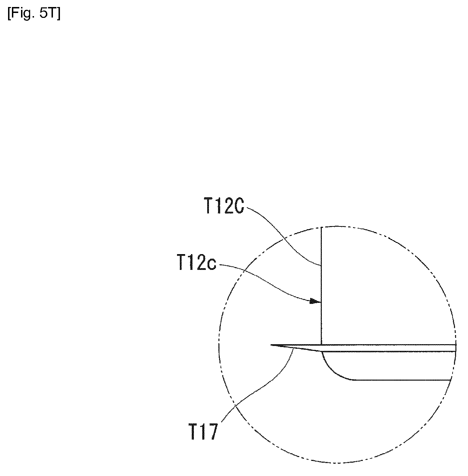

Fig. 5T is a main enlarged view illustrating a part B of Fig. 4T and illustrating the configuration of a sealing protrusion.

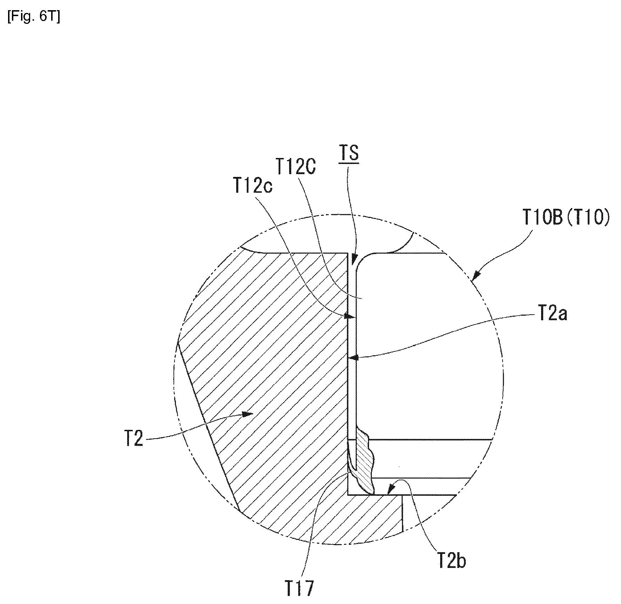

Fig. 6T is a partially cut main enlarged view illustrating a part A of Fig. 1T and illustrating the action of the sealing protrusion.

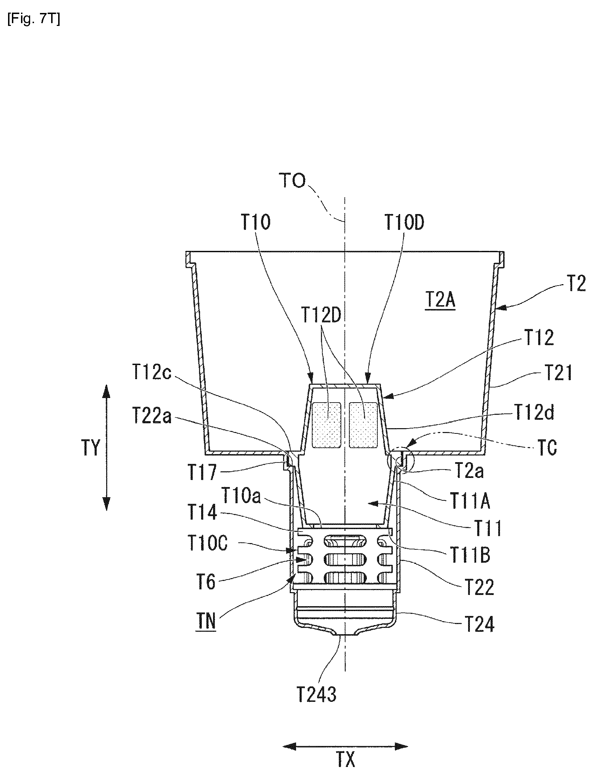

Fig. 7T is a longitudinal sectional view illustrating a water purification cartridge according to a second embodiment of the third aspect of the invention.

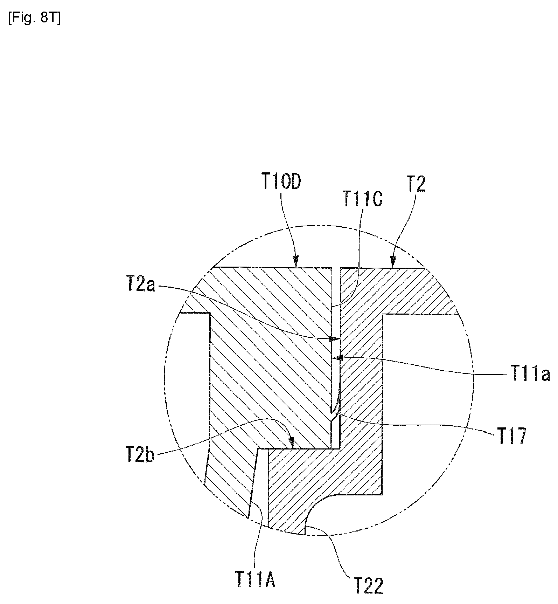

Fig. 8T is a main enlarged view illustrating a part C of Fig. 7T and illustrating the action of the sealing protrusion.

### MODE(S) FOR CARRYING OUT THE INVENTION

### (Embodiment of First Aspect of Invention)

Hereinafter, a water purification cartridge and a water purifier according to an embodiment of a first aspect of the invention will be described with reference to the drawings.

As illustrated in Fig. 1, a water purifier 1 of the embodiment is a gravity-type water purifier that causes purified water to flow down from a purified water outlet 2a of a bottom portion. The water purifier 1 includes a container body 2 which includes a raw water storage portion 2A and a water purification cartridge 10 which is detachably attached to a bottom portion inside the container body 2.

Here, the center axis of the container body 2 illustrated in Fig. 1 will be referred to as the container axis O, the opening side of the container body 2 in the direction of the container axis O will be referred to as the upside, the bottom portion side will be referred to as the downside, a direction orthogonal to the container axis O will be referred to as the lateral direction, and a direction about the container axis O will be referred to as the circumferential direction.

Further, the center axis of the water purification cartridge 10 (10A, 10B) is parallel to the container axis O, and in the description below, the container axis O will be commonly used as the center axis of the water purification cartridge 10.

The container body 2 includes a circumferential wall 21 which has, for example, a circular or oval shape in the top view, a bottom wall 22, and a concave fitting portion 23 which protrudes downward in the center portion of the bottom wall 22. The upper end of the container body 2 is opened, and the opening is closed or opened by a container lid (not illustrated). A step portion 24 which extends in the circumferential direction is formed in the continuous edge between the bottom wall 22 and the concave fitting portion 23, and flange portions 11c and 16c which are formed in the circumferential surface of the water purification cartridge 10 are placed thereon.

The concave fitting portion 23 is a storage portion that fits the water purification cartridge 10 thereinto from the upside. That is, the concave fitting portion 23 includes a side wall portion 231 and a bottom portion 232 which includes a purified water outlet 2a communicating with a downward flowing portion (a bottom member 18 to be described later) of the water purification cartridge 10. The bottom portion 232 is formed in a shape matching the bottom surface of the water purification cartridge 10 to be fitted.

As illustrated in Figs. 2 to 7, the water purification cartridge 10 is detachably assembled to the concave fitting portion 23 of the container body 2 including the raw water storage portion 2A illustrated in Fig. 1 while the pair of single cartridges 10A and 10B is connected in the lateral direction. Here, a cartridge which is located at the upstream side in the purified water flow direction among the pair of single cartridges 10A and 10B will be referred to as the first single cartridge 10A, and a cartridge which is located at the downstream side of the first single cartridge 10A will be referred to as the second single cartridge 10B. In Figs. 2 and 3, a cartridge having a low bottom surface in the up and down direction is the second single cartridge 10B, and a cartridge having a high bottom surface is the first single cartridge 10A.

Here, a direction in which the first single cartridge 10A and the second single cartridge 10B move close to and away from each other so as to be connected to each other will be referred to as the connection direction X.

As illustrated in Fig. 8, the first single cartridge 10A includes a bottomed cylindrical casing body 11 that stores a filter material (a filter medium) 5 therein and has an upper end opening 11 a along the container axis O, a lid 12 that blocks the upper end opening 11a, a partition member 13 that is located at the bottom portion of the casing body 11 so as to partition a space in the up and down direction, and a female passage 14 which is provided below the partition member 13.

The casing body 11 includes a circumferential wall 11A and a bottom wall 11B. In the circumferential wall 11A, a plane bonding wall 11b is provided at the connection side with respect to the second single cartridge 10B, and a circular-arc wall (a circular-arc wall 11e) is provided at a position facing the bonding wall 11b. Then, in the circumferential wall 11A, a flange portion 11c which protrudes outward and extends in the circumferential direction is provided at a portion near the upper end opening 11 a of the other circumferential surface excluding the bonding wall 11b. Furthermore, both left and right edges of the bonding wall 11b are respectively provided with a pair of locking pieces 11d (see Fig. 7) which protrudes in a direction moving close to the second single cartridge 10B in the connection direction X.

The first single cartridge 10A is assembled while being positioned to the container body 2 in a manner such that the flange portion 11c contacts the step portion 24 of the container body 2 illustrated in Fig. 1 from the upside.

The casing body 11 is provided with a plurality of raw water inlets 15 provided in the circumferential wall 11A excluding the bonding wall 11b so that a latticed opening is formed at the side of the upper end opening 11a. These raw water inlets 15 correspond to portions through which the raw water inside the raw water storage portion 2A in the container body 2 illustrated in Fig. 1 flows into the casing body 11.

In the bottom wall 11B of the casing body 11, the female passage 14 is formed at the side of the bonding wall 11b, and an inclined surface 11f which is inclined downward at it goes from the circular-arc wall 11e toward the bonding wall 11b in the connection direction X is formed at the side of the circular-arc wall 11e.

The partition member 13 is disposed at the side of the bottom wall 11B of the casing body 11, and is disposed so as to be gradually inclined downward as it goes from the bonding wall 11b toward the circular-arc wall 11e in the connection direction X. Here, the inclined bottom portion is provided with a plurality of penetration holes 13a. That is, the partition member 13 is inclined upward as it goes from the circular-arc wall 11e toward the bonding wall 11b. The filter material 5 is stored in an upper storage portion 11 C of the partition member 13. With such a configuration, air of the storage portion 11C easily comes out. Further, air is caused to easily flow from a flow passage portion 11D to be described later to the second single cartridge 10B located at the downstream side. Accordingly, degradation in filtering speed can be prevented. In addition, the partition member 13 may be integrated with the casing body 11 instead of being separated from the casing body.

As illustrated in Fig. 8, the female passage 14 has a tubular structure extending along the upper surface of the bottom wall 11B and having a flow direction along the connection direction X. One end of the female passage 14 is formed as an outlet 14a opened to the bonding wall 11b, and the other end 14b communicates with the flow passage portion 11D formed between the partition member 13 and the inclined surface 11f formed in the bottom wall 11B. The female passage 14 is formed so that a male passage tube 19 (to be described later) of the second single cartridge 10B is liquid-tightly inserted into the outlet 14a.

As illustrated in Figs. 2 and 8, the lid 12 includes a ceiling wall portion 12A and an attachment cylinder 12B, and the attachment cylinder 12B is detachably fitted into the upper end opening 11a of the casing body 11.

The ceiling wall portion 12A is provided with an upward protruding convex surface 12a and a top wall surface 12b having a plurality of air vent holes 12c formed at the top portion thereof. Further, an air reservoir 12C is formed at the lower surface side (at the side of the storage portion 11C of the casing body 11) of the convex surface 12a. The plurality of air vent holes 12c is disposed in the top wall surface 12b in series in the connection direction X.

As illustrated in Fig. 1, the air vent holes 12c in the first single cartridge 10A cause the storage portion 11C of the casing body 11 to communicate with the raw water storage portion 2A inside the container body 2. In addition, the shape of the hole diameter of each air vent hole 12c is appropriately set in balance so that the raw water stored in the raw water storage portion 2A does not flow therethrough and only the air generated from the filter material 5 stored in the storage portion 11C is discharged from the storage portion 11C toward the raw water storage portion 2A so that air is not replaced by water. Specifically, for example, the air vent hole disclosed in Patent Document (see JP 4131821 B1) can be employed.

As illustrated in Fig. 8, the second single cartridge 10B stores therein a hollow fiber membrane 3 (a porous filter membrane) forming a filter medium. Further, the second single cartridge 10B includes a cylindrical casing body 16 which includes an upper end opening 16a formed at the upper end side in the container axis O, a lid 17 which blocks the upper end opening 16a, a bottom member 18 that is fitted to the bottom portion opening of the casing body 16 so that purified water passes therethrough, and a male passage tube 19 which is provided in the circumferential surface of the casing body 16.

In the casing body 16, a plane bonding wall 16b is formed at the connection side to the first single cartridge 10A and a circular-arc wall (a circular-arc wall 16e) is formed at a position facing the bonding wall 16b. Then, in the casing body 16, a flange portion 16c which protrudes outward and extends in the circumferential direction is provided in a portion near the upper end opening 16a of the other circumferential surface excluding the bonding wall 16b. Each of both left and right edges of the bonding wall 16b is provided with a locking concave portion 16d (see Figs. 5 and 6) to which the locking piece 11d of the first single cartridge 10A is fitted. That is, when the pair of locking pieces 11d engages with the locking concave portions 16d, a positional displacement between the first single cartridge 10A and the second single cartridge 10B in the lateral direction orthogonal to the connection direction X is prevented.

Then, the second single cartridge 10B is assembled while being positioned to the container body 2 in a manner such that the flange portion 16c contacts the step portion 24 of the container body 2 illustrated in Fig. 1 from the upside.

The casing body 16 is provided with a groove 16g which is provided in the outer edge of the lower end in the circumferential direction. The groove 16g is provided with an elastic member (not illustrated) such as an O-ring and a gasket. Accordingly, a seal structure is formed in which the bottom portion 232 of the concave fitting portion 23 of the container body 2 liquid-tightly contacts the groove by the elastic member.

As illustrated in Fig. 8, the hollow fiber membrane 3 is disposed so as to be coaxial with the storage portion 16A of the casing body 16, and a gap 16f is formed between the hollow fiber membrane 3 and the inner circumferential surface of the casing body 16 so as to follow the inner circumferential surface thereof. The gap 16f serves as a passage that guides the water flowing from the first single cartridge 10A into the storage portion 16A toward the upper end of the hollow fiber membrane 3.

Here, the hollow fiber membrane 3 has a cylindrical shape in which several layers of hollow fibers are filed and a circular hole is formed at the center portion in the top view. When a support column 18a formed uprightly in the bottom member 18 in the container axis O is inserted through the circular hole, the hollow fiber membrane 3 is stored in the storage portion 16A. When the hollow fiber membrane 3 is provided in the storage portion 16A, the upper end thereof is located below the upper end opening 16a of the casing body 16.

As illustrated in Fig. 1, the second single cartridge 10B is disposed so that the bottom member 18 is located directly above the purified water outlet 2a of the container body 2.

As illustrated in Figs. 5, 6, and 8, the male passage tube 19 is a tubular member that extends from the bonding wall 16b of the casing body 16 outward in the connection direction X. When the male passage tube 19 is liquid-tightly inserted into the female passage 14 of the first single cartridge 10A, the passages of both single cartridges 10A and 10B communicate with each other. That is, the circumferential surface of the male passage tube 19 is provided with an elastic member 19a such as an O-ring and a gasket. Accordingly, a seal structure is formed in which the male passage tube 19 is closely fitted to the female passage 14 by the elastic member 19a.

The lid 17 includes a ceiling wall portion 17A and an attachment cylinder 17B, and the attachment cylinder 17B is detachably fitted to the upper end opening 16a of the casing body 16.

As illustrated in Fig. 8, in the ceiling wall portion 17A, a convex surface 17a is formed so as to protrude upward, and a top wall surface 17b is formed so that a plurality of air vent holes 17c is formed at the top portion thereof. Further, an air reservoir 17C is formed at the lower surface side (at the side of the storage portion 16A of the casing body 16) of the convex surface 17a. The plurality of air vent holes 17c is disposed in the top wall surface 17b in series in the connection direction X.

As illustrated in Fig. 1, the air vent holes 17c in the second single cartridge 10B cause the storage portion 16A of the casing body 16 to communicate with the raw water storage portion 2A inside the container body 2. Further, since the shape of the hole diameter of the air vent hole 17c is similar to that of the air vent hole 12c formed in the first single cartridge 10A, the detailed description thereof will be omitted herein.

Here, the filter material 5 stored in the first single cartridge 10A is formed by absorbent. As the absorbent, powdered absorbent, granular absorbent formed by the powdered absorbent, fibrous absorbent, and the like are exemplified.

As specific absorbent, powdered absorbent, granular absorbent formed by the powdered absorbent, fibrous absorbent, and the like are exemplified. As such absorbent, for example, inorganic absorbent such as natural absorbent (natural zeolite, silver zeolite, acid white clay, and the like) and synthetic absorbent (synthetic zeolite, bacterial adsorption polymer, hydroxyapatite, molecular sieve, silica gel, silica alumina gel absorbent, porous glass, titanium silicate, and the like) and organic absorbent such as powdered activated charcoal, granular activated charcoal, fibrous activated charcoal, block-shaped activated charcoal, extruded activated charcoal, molded activated charcoal, polymer adsorption resin, synthetic granular activated charcoal, synthetic fibrous activated charcoal, ion exchange resin (cation exchange resin and anion exchange resin), ion exchange fiber, chelate resin, chelate fiber, high-absorption resin, high-absorption fiber, oil absorbing resin, and oil absorbent are exemplified. Among these, antibacterial silver-impregnated activated charcoal is desirable. Particularly, in the case of the granular absorbent, it is desirable that the particle size distribution be 200 to 1700 µm. When the particle size is small, the water passing resistance increase and the flow rate decreases. When the particle size is large, the surface area decreases and the removing performance is degraded.

Further, as the hollow fiber membrane 3 stored in the second single cartridge 10B, a hollow fiber membrane appropriately used to filter and remove granular materials including a microorganism and bacteria and having a size of 0.1 µm or more can be used.

As the hollow fiber membrane 3, various porous or tubular hollow fiber membranes can be used. For example, various materials such as cellulose, polyolefin (polyethylene, polypropylene), polyvinyl alcohol, ethylene-vinyl alcohol copolymer, polyether, polymethylmethacrylate (PMMA), polysulfone, polyacrylonitrile, polytetrafluoroethylen, polyvinylidene fluoride (PVDF), polycarbonate, polyester, polyamide, and aromatic polyamide can be used.

Among these, when the treatment or the working characteristic of the hollow fiber membrane is considered, a hollow fiber membrane formed of polyolefin such as polyethylene or polypropylene is desirable.

According to the water purification cartridge and the water purifier of the embodiment, an action and an effect are obtained as below.

That is, as illustrated in Fig. 1, in the water purifier 1, when the raw water is supplied to the raw water storage portion 2A of the container body 2, the raw water is introduced from the raw water inlet 15 provided in the casing body 11 of the first single cartridge 10A into the first single cartridge 10A (into the storage portion 11C). Then, when the raw water passes through the filter material 5 provided inside the storage portion 11C, chemical substance such as chlorine, trihalomethane, and agricultural chemical and heavy metal such as soluble lead are adsorbed to the filter material so as to be removed, and then the raw water flows from the penetration hole 13a of the partition member 13 into the lower flow passage portion 11D of the partition member 13.

Furthermore, as illustrated in Fig. 8, the water which is filtered by the filter material 5 passes through the female passage 14 and the male passage tube 19 of the second single cartridge 10B and is introduced into the casing body 16 of the second single cartridge 10B. Then, the water which passes through the gap 16f inside the storage portion 16A is purified so that bacteria, a microorganism, or suspended substance are filtered by the hollow fiber membrane 3. Then, when the water purified by the water purification cartridge 10 is extracted, the purified water outlet 2a of the container body 2 illustrated in Fig. 1 is opened so that the purified water is extracted from the purified water outlet 2a through the bottom member 18 of the second single cartridge 10B.

In the embodiment, as illustrated in Fig. 8, the pair of single cartridges 10A and 10B is connected to each other in the lateral direction and a different single cartridge is not disposed in each single cartridge. Accordingly, air generated from the filter medium (the filter material 5 and the hollow fiber membrane 3) stored in the storage portions 11C and 16A can be discharged to the outside of the single cartridges 10A and 10B.

That is, there is no need to provide an air vent hole extending upward from the cartridge disposed at the downside as in the case where the single cartridges are connected to each other in the longitudinal direction (the up and down direction) in the related art. Further, the water purification cartridge according to the embodiment has a simple structure instead of a complex shape. Accordingly, it is possible to decrease the cost of the member by decreasing the amount of the resin material used in the air vent hole.

Further, the water purification cartridge according to the embodiment has a configuration in which the first single cartridge 10A and the second single cartridge 10B are disposed in the lateral direction. Further, the water purification cartridge according to the embodiment is easily attached and detached in a manner such that both the female passage 14 and the male passage tube 19 are fitted to each other and the pair of locking pieces 11d of the first single cartridge 10A is locked to the locking concave portion 16d (see Fig. 6) of the second single cartridge 10B. Accordingly, it is possible to replace and clean the filter medium stored in the cartridge by individually separating the filter medium. For that reason, it is possible to decrease the utilization efficiency of the filter medium by maximally exhibiting the water purification performance of the filter medium even when a filter medium having a different life time is used, and hence to decrease the running cost of the cartridge.

Further, in the embodiment, it is possible to efficiently discharge air generated in the single cartridges 10A and 10B through the air vent holes 12c and 17c provided in the ceiling wall portions 12A and 17A of the lids 12 and 17. Accordingly, it is possible to prevent air from being accumulated inside the single cartridges 10A and 10B.

Further, in the embodiment, it is possible to effectively accumulate air generated in the single cartridges 10A and 10B of the air reservoirs 12C and 17C at the inner surfaces of the ceiling wall portions 12A and 17A. Accordingly, it is possible to prevent degradation in water purification efficiency due to the air accumulated in the filter medium inside the single cartridges 10A and 10B.

Then, in the embodiment, the pair of locking pieces 11d of the first single cartridge 10A can be locked to the second single cartridge 10B while the second single cartridge is nipped by the pair of locking pieces in the left and right direction. For that reason, it is possible to prevent a positional displacement of the single cartridges 10A and 10B connected to each other in the lateral direction (the left and right direction) orthogonal to the connection direction X and hence to maintain a stable posture.

In this way, since there is no need to provide the air vent hole as in the related art in the water purification cartridge and the water purifier of the embodiment, it is possible to realize a simple structure capable of discharging air generated in the filter medium. Thus, it is possible to decrease the cost of the member by decreasing the amount of the resin material.

Further, in the embodiment, since the single cartridges 10A and 10B are connected to each other in the lateral direction, it is possible to separately replace and clean a filter medium having a different life time. Accordingly, there is an effect that the running cost can be decreased.

Further, the technical scope of the first aspect of the invention is not limited to the above-described embodiment, and various modifications can be made without departing from the spirit of the invention.

For example, in the above-described embodiment, the pair of first and second single cartridges 10A and 10B is used as the water purification cartridge 10 provided inside the water purifier 1. However, the water purification cartridge 10 is not limited to two single cartridges, and three or more single cartridges may be connected to each other in the lateral direction. Even in this case, the single cartridges may be connected to each other similarly to the above-described embodiment. That is, in the above-described embodiment, two single cartridges are disposed at the left and right sides, but when three or more single cartridges are used, the single cartridges may be disposed sequentially in the lateral direction.

Further, in the embodiment of the first aspect of the invention, the locking piece 11d of the first single cartridge 10A is locked to the locking concave portion 16d of the second single cartridge 10B, and the locking structure can be omitted.

Further, in the embodiment of the first aspect of the invention, both the single cartridges 10A and 10B are respectively provided with the air vent holes 12c and 17c and the air reservoirs 12C and 17C, but these members can be provided only in one of the single cartridges. Then, the number of the air vent holes 12c and 17c and the configuration of the hole diameter can be appropriately modified, and the capacities (the sizes) of the air reservoirs 12C and 17C can be appropriately modified in accordance with the shape of the lid.

Further, in the water purification cartridge 10 of the embodiment of the first aspect of the invention, the passage between the single cartridges 10A and 10B is formed by the connection between the female passage 14 and the male passage tube 19, but the invention is not limited to the configuration. For example, a passage structure having a different shape can be used.

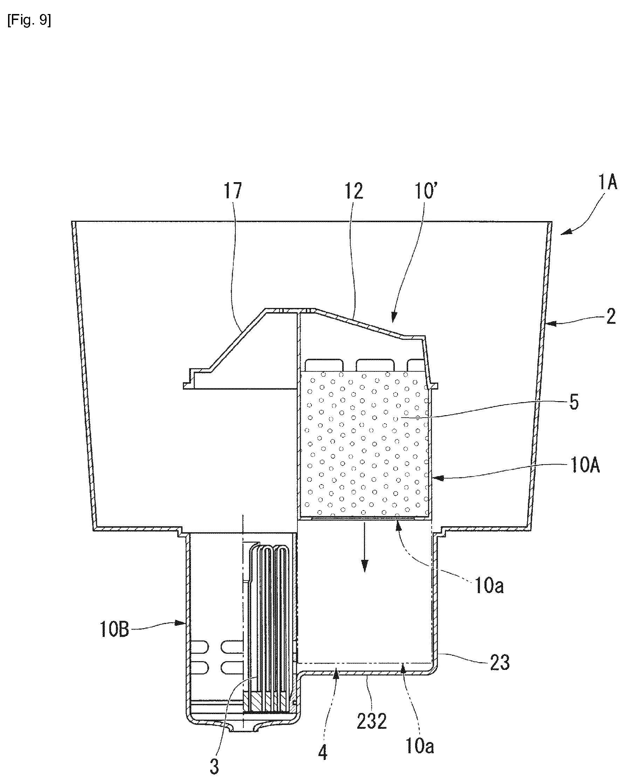

For example, in a water purification cartridge 10' of a water purifier 1A according to a first modified example illustrated in Fig. 9, a passage portion 4 for water flowing between the single cartridges 10A and 10B is formed between a bottom surface 10a of the first single cartridge 10A and the bottom portion 232 in the concave fitting portion 23 of the container body 2. Further, in the first single cartridge 10A of the first modified example, the filter material 5 is stored on the bottom surface 10a of the casing body 11, and the partition member 13 or the female passage 14 of the above-described is omitted.

Further, the lid 17 of the second single cartridge 10B is integrated with the lid 12 of the first single cartridge 10A. For that reason, when the first single cartridge 10A is separated from the container body 2, the lid of the second single cartridge 10B is also opened at the same time. For that reason, it is possible to easily replace and clean the hollow fiber membrane 3 without separating the casing body 16 of the second single cartridge 10B from the container body 2. Further, in the first modified example, it is desirable that the casing body 16 of the single cartridge 10B be opened in the circumferential direction. The water which is treated by the single cartridge 10A can be easily received into the single cartridge 10B from the opening.

In this way, according to the water purifier 1A of the first modified example, since it is possible to form the passage portion 4 by using the gap between the first single cartridge 10A and the container body 2, the single cartridge does not need to be provided with the passage portion for the water flowing between the single cartridges 10A and 10B. For that reason, it is possible to decrease the cost of the member by simplifying the structure of the cartridge.

Further, the bottom surface 10a of the first single cartridge 10A is provided with a mesh-shaped flow hole. The bottom surface 10a may be formed in the horizontal direction, but it is desirable that the bottom surface be inclined upward as it goes toward the second single cartridge 10B.

With such a configuration, air accumulated in the passage portion 4 can flow to the downstream single cartridge 10B along the inclined surface. Further, air inside the filter material 5 can easily come out. Accordingly, it is possible to prevent air from being accumulated inside the passage or the filter material and hence to sufficiently exhibit the water purification performance by maintaining the filtering speed.

Further, in the first modified example, the first single cartridge 10A may be provided with a locking piece and the second single cartridge 10B may be provided with a locking concave portion.

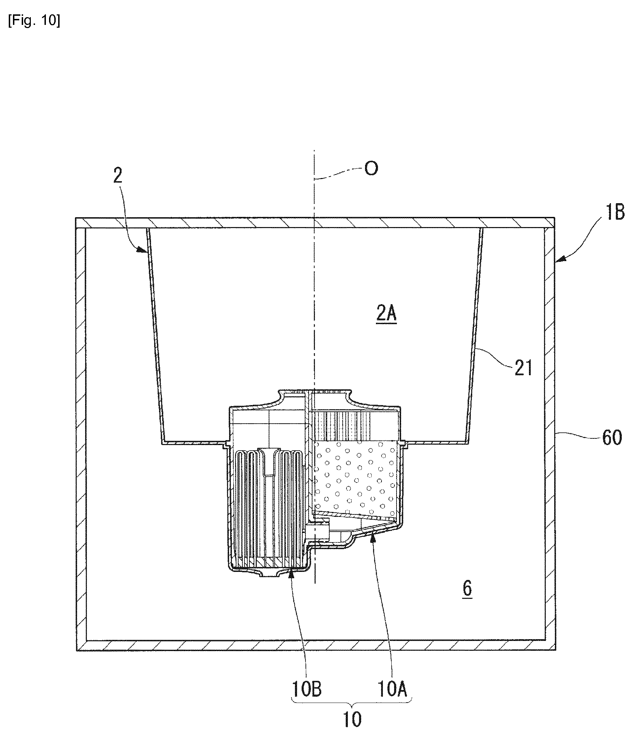

In the embodiment of the first aspect of the invention, the water purifier 1 is the gravity-type water purifier, and is used to cause the purified water to flow down from the purified water outlet 2a of the bottom portion. Here, the water purifier includes the container body 2 including the raw water storage portion 2A and the water purification cartridge 10 detachably provided in the bottom portion inside the container body 2. Meanwhile, as in the water purifier 1B of the second modified example illustrated in Fig. 10, a purified water storage portion 6 storing purified water may be provided. That is, the container body 2 including the water purification cartridge 10 (10A, 10B) is disposed inside a water purification container 60. Even in this case, the single cartridges 10A and 10B may be connected to each other similarly to the above-described embodiment.

In this way, according to the water purifier 1B of the second modified example, since the protruding amount of the cartridge 10 toward the purified water storage portion 6 is small, the amount of the portion immersed into the purified water stored in the purified water storage portion 6 is small. Accordingly, it is possible to prevent a decrease in purification speed and to suppress the elution of the resin material used in the cartridge.

Further, the configuration related to the sizes, the shapes, and the positions of the water purification cartridge 10 and the container body 2 of the water purifier 1 of the embodiment of the first aspect of the invention can be appropriately modified.

In addition, the component of the above-described embodiment can be appropriately replaced by the existing component without departing from the spirit of the invention, and the modified examples can be appropriately combined.

### (Embodiment of Second Aspect of Invention)

Hereinafter, a water purification cartridge and a water purifier according to an embodiment of a second aspect of the invention will be described.

### (First Embodiment of Second Aspect of Invention)

A water purifier S1 according to the embodiment illustrated in Fig. 1S includes a container body S2 which includes a raw water storage portion S2A, a water purification cartridge S10 which is detachably provided in the bottom portion of the container body S2, an outer container S3 which includes a purified water storage portion S3A storing water purified by the water purification cartridge S10, and a container lid S4 which blocks an opening end of the outer container S3.

Here, the center axis of the container body S2 illustrated in Fig. 1S will be referred to as the container axis SO, the opening side of the container body S2 in the direction of the container axis SO will be referred to as the upside, the bottom portion side will be referred to as the downside, a direction orthogonal to the container axis SO will be referred to as the lateral direction SX, and a direction about the container axis SO will be referred to as the circumferential direction. Further, the direction (the up and down direction) in the container axis SO corresponds to the longitudinal direction SY of the second aspect of the invention.

The outer container S3 is formed in a bottomed cylindrical shape and includes, for example, a circumferential wall S31 formed in a circular or oval shape in the top view and a bottom wall S32. A handle S33 and a spout S34 are integrated with the circumferential wall S31, and the container lid S4 is detachably provided in the opening end of the circumferential wall S31.

In the container lid S4, a portion that covers the spout S34 of the outer container S3 is provided with a pouring potion S4a which is opened toward the outside of the container by the water pressure of the purified water poured out from the inside of the container. The pouring portion rotates about a hinge so that the spout S34 is able to be opened and closed.

The upper end of the container body S2 is opened, and an opening edge S2a is integrated with or separated from an opening end S3a of the outer container S3. Accordingly, the upper end of the container body is closed and opened by the container lid S4. The container body S2 includes a large diameter wall portion S21, a small diameter wall portion S22 which is provided at the lower portion of the large diameter wall portion S21, and a bottom wall S23 which blocks the lower end of the small diameter wall portion S22 and includes a fitting concave portion S24 protruding downward.

The large diameter wall portion S21 and the small diameter wall portion S22 are continuously formed by a continuous portion S25 extending in the circumferential direction. The small diameter wall portion S22 serves as the storage portion of the water purification cartridge S10. Then, the large diameter wall portion S21 serves as the raw water storage portion S2A that stores water to be injected into the container body S2 so as to be purified therein. Further, the upper edge of the small diameter wall portion S22 and the upper edge of the fitting concave portion S24 are respectively provided with step portions (a first step portion S22a and a second step portion S24a) extending in the circumferential direction. Flange portions S12c and S14c which are formed on the circumferential surface of the water purification cartridge S10 are respectively placed on the first step portion S22a and the second step portion S24a.

The fitting concave portion S24 is disposed at the side of the spout S34 in the bottom wall S23 and is formed in a bottomed cylindrical shape. As illustrated in Fig. 2S, the fitting concave portion serves as a storage portion into which a first split unit S10A is fitted from the upside so as to be assembled. With such an arrangement, the split unit S10A cannot be easily separated from a storage portion S 14 when the purified water is poured out from the container. Further, the fitting concave portion S24 includes a circumferential portion S241, a bottom portion S242, and an outlet S243 which is located at the center portion of the bottom portion S242 so as to penetrate the center portion in the thickness direction. The circumferential portion S241 is provided with a groove S24b formed in the circumferential direction so that an O-ring or the like engages with the groove.

As illustrated in Fig. 1S, in the water purification cartridge S10, the first split unit S10A which is located at the downstream side among the pair of split units S10A and S10B is assembled to the fitting concave portion S24 of the container body 2 (see Fig. 2S). Further, as illustrated in Fig. 3S, in the water purification cartridge S10, the second split unit S10B disposed at the upstream side is disposed inside the small diameter wall portion S22 and is connected to the first split unit S10A from the upside. At this time, storage portions S11 and S14 are disposed in parallel in the lateral direction SX between the first split unit S10A and the second split unit S10B, and both storage portions are connected to each other while moving close to each other in the longitudinal direction SY (the up and down direction). In the embodiment, a contact portion between an upper end S10a of the first split unit S10A and a lower end S12e of a lid S 12 of the second split unit S10B serves as a connection portion.

Then, the first split unit S10A and the second split unit S10B are respectively stored in the small diameter wall portion S22 and are assembled while only a part of the lower portion of the first split unit S10A is fitted to the fitting concave portion S24.

In this way, as illustrated in Fig. 3S, the pair of split units S10A and S10B can be attached and detached while moving close to and away from each other in the longitudinal direction SY.

The second split unit S10B has a configuration in which the first storage portion S11 formed in a bottomed cylindrical shape and storing a filter material (a filter medium) S5 is integrated with a lid S12 blocking the upper end of the first storage portion S11.

Further, the first storage portion S11 and the lid S12 can be formed separately and attached to each other instead of being integrated with each other.

The first storage portion S11 includes a circumferential wall S11A and a bottom wall S11B. The circumferential wall S11A is formed in a size in which the circumferential wall can be disposed in a substantially half area inside the small diameter wall portion S22 in the top view. In the circumferential wall S11A, a plane partition wall S11a is formed at the side of the first split unit S10A and a circular-arc wall (a circular-arc wall S11b) is continuously formed at both ends of the partition wall S11a in the circumferential direction. The bottom wall S11B is provided with a mesh-shaped flow hole S11c. The bottom wall S11B may be formed in the horizontal direction. However, it is desirable that the bottom wall be gradually inclined downward as it goes away from the first split unit S10A in the lateral direction SX. That is, the bottom wall S11B is inclined upward as it goes toward the downstream second split unit S10B. The flow hole is not limited to such a configuration, and any configuration may be employed as long as the filter medium does not pass therethrough.

For example, a plurality of holes may be empty and a non-woven fabric or a woven fabric may be fixed to the bottom wall. Further, the inclination angle of the bottom wall S11B can be arbitrarily set. However, an inclined surface of 1° to 10° is desirable and an inclined surface of 2° to 8° or an inclined surface of 1° to 5° is more desirable. When the inclination is smaller than 1°, the air inside the split unit S10A does not easily come out upward. Further, the air inside the purified water passage S13 stays inside the purified water passage. For that reason, the filtering speed decreases. When the inclination is larger than 10°, a position in which water is not dispersed is formed in the filter medium, and hence the water purification performance cannot be sufficiently exhibited.

In the second split unit S10B, a purified water passage S13 which causes the purified water to flow from the first storage portion S11 toward the second storage portion S14 (to be described later) of the first split unit S10A is formed between the bottom wall S11B of the first storage portion S11 and the bottom wall S23 of the container body S2.

The lid S 12 is formed so as to block the upper end opening of the small diameter wall portion S22 of the container body S2. Accordingly, the openings of the first storage portion S11 and the second storage portion S 14 are blocked. Further, the lid S12 is provided with a ceiling wall portion S12A and a circumferential wall cylinder S12B. The circumferential wall portion S12B is formed as a finger catching portion, and hence the water purification cartridge S10 can be easily attached and detached.

The ceiling wall portion S12A is formed in a shape protruding upward and is provided with a top wall surface S12b having a plurality of air vent holes S12a formed at the top portion thereof. The lower surface side of the ceiling wall portion S12A is provided with an air reservoir S12C serving as an air storage area.

The plurality of air vent holes S12a is provided so as to enable the communication among the first storage portion S11 of the second split unit S10B, the second storage portion S14 (to be described later) of the first split unit S10A, and the raw water storage portion S2A in the container body S2. Further, the shape of the hole diameter of the air vent hole S12a is appropriately set in balance so that the raw water stored in the raw water storage portion S2A does not flow therethrough and only the air generated from the filter material S5 stored in the first storage portion S11 is discharged from the first storage portion S11 toward the raw water storage portion S2A so that air is not replaced by water. Specifically, for example, an air vent hole disclosed in Patent Document (Japanese Patent No. 4131821) can be employed.

The circumferential surface of the circumferential wall cylinder S12B is provided with a flange portion S12c which protrudes outward from the lower end and extends in the circumferential direction. Here, the circumferential wall cylinder is assembled so as to be detachably positioned to the container body S2 while the flange portion S12c is placed on the first step portion S22a formed in the small diameter wall portion S22.

As the material of the flange portion S12c, resin (ABS resin, polycarbonate, acryl resin, polypropylene, polystyrene, and the like) is exemplified. Further, the flange portion S12c is formed so as to be weaker than the rigidity of the container body S2. With such a configuration, the circumferential wall cylinder is liquid-tightly assembled so that the flange portion S12c is press-inserted into the container body 2. Further, an elastic member such as an O-ring may be provided so that the flange portion S12c is liquid-tightly assembled to the container body S2. In addition, the material of only the flange portion S12c in the lid S12 may be formed of the above-described resin or the material of the entire lid including the flange portion S12c may be formed of the above-described resin.

Further, the outer circumferential side of the top wall surface S12b in the ceiling wall portion S12A is provided with an inclined surface S12d. In an area near the first storage portion S11 in relation to the partition wall S11a in the inclined surface S12d, a plurality of raw water inlets S12D forming a latticed opening is provided with a gap therebetween in the circumferential direction. The raw water inlets may be covered by a mesh member. These raw water inlets S12D are openings into which the raw water inside the raw water storage portion S2A in the container body S2 illustrated in Fig. 1S flows into the first storage portion S 11.

The first split unit S10A includes the cylindrical second storage portion S14 which stores a hollow fiber membrane S6 (a porous filter membrane) forming a filter medium and includes an upper end opening formed at the upper end side in the container axis SO and a bottom member S15 that is provided in the bottom portion of the second storage portion S14 and includes a purified water outlet S15a through which the purified water passes.

The circumferential surface of the second storage portion S14 is provided with a plurality of openings S 14b provided in the longitudinal direction SY and the circumferential direction. Since the plurality of openings S 14b is provided, water flows into the hollow fiber membrane S6 from many directions and hence pressure loss is degraded. Furthermore, it is possible to evenly use the hollow fiber membrane S6. Further, it is possible to maintain the strength of the second storage portion S 14 and to decrease the cost of the member. Further, it is possible to easily hold the opening S 14b by a finger when replacing the split unit S10A. Then, the lower end portion of the second storage portion S14 communicates with the purified water passage S13. The lower end circumferential surface of the second storage portion S14 is provided with a flange portion S 14c which protrudes outward and extends in the circumferential direction. Here, the second storage portion is assembled so as to be detachably positioned to the container body S2 while the flange portion S 14c is placed on the second step portion S24a formed in the fitting concave portion S24 from the upside (see Fig. 3S).

The second storage portion S14 stores the hollow fiber membrane S6, and a gap is formed between the hollow fiber membrane S6 and the inner circumferential surface of the second storage portion S14 so as to follow the inner circumferential surface. Further, a gap (a storage portion SN) for storing water to be filtered is formed between the second storage portion S14 and the container body S2 (the small diameter wall portion S22). The gap serves as a passage through which the water purified by the second split unit S10B, passing through the purified water passage S13, and flowing into the second storage portion S 14 flows toward the upper end side of the hollow fiber membrane S6.

The bottom member S15 is fitted to the fitting concave portion S24 of the container body S2. The circumferential surface of the bottom member S15 is provided with a groove (not illustrated) formed in the circumferential direction, and an elastic member S16 such as an O-ring and a gasket is provided in the groove. A seal structure is formed so as to liquid-tightly contact the groove S24b of the fitting concave portion S24 of the container body S2 by the elastic member S16.

Here, the filter material S5 stored in the second split unit S10B is formed by absorbent. As the absorbent, powdered absorbent, granular absorbent formed by the powdered absorbent, fibrous absorbent, and the like are exemplified.

As specific absorbent, powdered absorbent, granular absorbent formed by the powdered absorbent, fibrous absorbent, and the like are exemplified. As such absorbent, for example, inorganic absorbent such as natural absorbent (natural zeolite, silver zeolite, acid white clay, and the like) and synthetic absorbent (synthetic zeolite, bacterial adsorption polymer, hydroxyapatite, molecular sieve, silica gel, silica alumina gel absorbent, porous glass, titanium silicate, and the like) and organic absorbent such as powdered activated charcoal, granular activated charcoal, fibrous activated charcoal, block-shaped activated charcoal, extruded activated charcoal, molded activated charcoal, polymer adsorption resin, synthetic granular activated charcoal, synthetic fibrous activated charcoal, ion exchange resin (cation exchange resin and anion exchange resin), ion exchange fiber, chelate resin, chelate fiber, high-absorption resin, high-absorption fiber, oil absorbing resin, and oil absorbent are exemplified. Among these, antibacterial silver-impregnated activated charcoal is desirable. Particularly, in the case of the granular absorbent, it is desirable that the particle size distribution be 200 to 1700 µm. When the particle size is small, the water passing resistance increase and the flow rate decreases. When the particle size is large, the surface area decreases and the removing performance is degraded. Among these, granular absorbent including silver added activated charcoal is desirable in consideration of adsorptivity.

Further, as the hollow fiber membrane S6 stored in the first split unit S10A, a hollow fiber membrane appropriately used to filter and remove granular materials including a microorganism and bacteria and having a size of 0.1 µm or more can be used.

As the hollow fiber membrane S6, various porous or tubular hollow fiber membranes can be used. For example, various materials such as cellulose, polyolefin (polyethylene, polypropylene), polyvinyl alcohol, ethylene-vinyl alcohol copolymer, polyether, polymethylmethacrylate (PMMA), polysulfone, polyacrylonitrile, polytetrafluoroethylen, polyvinylidene fluoride (PVDF), polycarbonate, polyester, polyamide, and aromatic polyamide can be used.

Among these, when the treatment or the working characteristic of the hollow fiber membrane is considered, a hollow fiber membrane formed of polyolefin such as polyethylene or polypropylene is desirable.

According to the water purification cartridge and the water purifier of the embodiment describe above, an action and an effect are obtained as below.

As illustrated in Fig. 1S, in the water purifier S1, when the raw water is supplied to the raw water storage portion S2A of the container body S2, the raw water is introduced from the raw water inlet S12D provided in the lid S12 of the second split unit S10B into the first storage portion S11 of the second split unit S10B by its own weight. Then, when the raw water passes through the filter material S5 provided inside the first storage portion S11, chemical substance such as chlorine, trihalomethane, and agricultural chemicals and heavy metal such as soluble lead are adsorbed to the filter material so as to be removed.

The water purified while passing through the filter material S5 flows from the flow hole S11c of the bottom wall S11B to the downside of the second split unit S10B, passes from the purified water passage S13 to the opening S14b, and is introduced into the second storage portion S14 of the first split unit S10A. The water which passes through the second storage portion S 14 is purified so that bacteria, a microorganism, or suspended substance are filtered by the hollow fiber membrane S6. Then, the water purified by the water purification cartridges S10 flows from the outlet S243 of the container body S2 to the outside of the container body S2 through the purified water outlet S15a of the first split unit S10A and is stored inside the purified water storage portion S3A of the outer container S3.

In this way, in the embodiment, since the pair of split units S10A and S10B is connected to each other while moving close to each other in the longitudinal direction SY and the storage portions S11 and S 14 are disposed in parallel in the lateral direction SX, only the upper second split unit S10B can be individually separated from the lower first split unit S10A while the lower first split unit S10A is left in the water purifier S1 (the container body S2). For that reason, it is possible to easily and separately replace or clean the filter medium having a different life time and hence to efficiently perform the attachment and detachment operation.

For example, when only the upper filter medium is replaced or cleaned, the only upper second split unit S10B may be separated. Even when only the lower filter material S5 is replaced or cleaned, the lower first split unit S10A can be separated after the upper second split unit S10B is separated. When a cleaning operation is performed in this way, it is possible to efficiently perform a cleaning operation without taking an effort of extracting the filter medium as in the related art due to a simple structure in which both the filter material S5 and the hollow fiber membrane S6 are stored inside the split units S10A and S10B and only the split units S10A and S10B can be attached and detached.

In this way, since it possible to easily replace the filter medium (the filter material S5 and the hollow fiber membrane S6) for each of the split units S10A and S10B, it is possible to maximally exhibit the water purification performance of the filter medium even when the filter medium having a different life time is used. Accordingly, it is possible to suppress degradation in utilization efficiency of the filter medium and to decrease the running cost of the water purification cartridge S10.

Further, in the embodiment, the pair of split units S10A and S10B is connected to each other while moving close to each other in the longitudinal direction SY, but since the storage portions S11 and S14 are disposed in the lateral direction SX, the storage portions are not disposed so as to overlap each other in the longitudinal direction SY (the up and down direction). Further, since the upper portions of the storage portions S11 and S14 are opened, the air generated inside the storage portions S11 and S14 can be released toward the upside of the storage portions S11 and S14.

Further, in the embodiment, it is possible to efficiently discharge the air generated inside the split units S10A and S10B through the air vent hole S12a provided in the ceiling wall portion S12A of the lid S12 and to prevent the air from being stored inside the split units S10A and S10B.

Further, in the embodiment, since the air generated inside the split units S10A and S10B can be effectively accumulated in the air reservoir S12C at the inner surface side of the ceiling wall portion S12A, it is possible to prevent degradation in purification efficiency caused by the air accumulated in the filter medium in the split units S10A and S10B.

Furthermore, in the embodiment, since the purified water passage S 13 is formed so as to cause the water filtered by the upstream second split unit S10B to flow toward the downstream first split unit S10A, there is no need to provide such a passage portion in the water purification cartridge S10. For that reason, it is possible to decrease the cost of the member by simplifying the structure of the cartridge.

Further, the upper surface of the purified water passage S 13 formed between the container body S2 and the bottom wall S11B of the second split unit S10B is inclined. Accordingly, it is possible to cause the air inside the purified water passage S13 to easily flow toward the downstream first split unit S10A along the inclined surface and hence to prevent the air from being accumulated inside the purified water passage S 13.

In this way, in the water purification cartridge and the water purifier of the embodiment, there is an effect that the filter medium having a different life time can be separately replaced and cleaned with a simple configuration and the replacement operation is efficiently performed.

Next, a water purification cartridge and a water purifier according to another embodiment of the second aspect of the invention will be described with reference to the accompanying drawings. Here, the same reference numeral will be given to the same or equivalent component as or to the first embodiment, the repetitive description thereof will be omitted, and only the difference from the first embodiment will be described.

### (Second Embodiment of Second Aspect of Invention)

As illustrated in Fig. 4S, a water purifier according to a second embodiment is obtained by assembling the water purification cartridge S10 in which the storage portions S11 and S 14 of the pair of split units S10C and S10D are disposed in series in the longitudinal direction SY to the container body S2. That is, the lower first split unit S10C of the pair of split units S10C and S10D is assembled to the fitting concave portion S24 of the container body S2 (see Figs. 5S and 6S). Further, as illustrated in Fig. 6S, the upstream (upper) second split unit S10D is disposed inside the small diameter wall portion S22 and is connected to the first split unit S10C from the upside. In the embodiment, a contact portion between the upper end S10a of the first split unit S10C and the bottom wall S11B of the second split unit S10D becomes a connection portion.

In the container body S2 according to the embodiment, the small diameter wall portion S22 has a cross-sectional area capable of storing the cross-sectional shape of the first split unit S10C. The small diameter wall portion S22 is disposed so as to be coaxial with the container axis SO of the container body S2. Then, the fitting concave portion S24 is disposed so as to be coaxial with the small diameter wall portion S22.

Here, since the basic configuration of the pair of split units S10C and S10D is similar to that of the first embodiment, only difference will be described in detail.

The upper end position of the first split unit S10C assembled to the fitting concave portion S24 is set to be substantially a half of the height of the small diameter wall portion S22 in the longitudinal direction SY.

In the second split unit S10D, the circumferential wall S11A of the first storage portion S11 is formed in a cylindrical shape and the first storage portion S11 is disposed so as to be coaxial with the small diameter wall portion S22 of the container body S2. The height dimension (the length dimension in the longitudinal direction SY) of the first storage portion S11 is substantially a half of the small diameter wall portion S22, and the bottom wall S11B is provided so as to contact the first split unit S10C while the flange portion S12c of the lid S12 engages with the first step portion S22a of the small diameter wall portion S22.

The lower end of the inclined surface S12d of the ceiling wall portion S12A of the lid S12 is continuously formed with the upper edge of the cylindrical circumferential wall S11A. The circumferential surface of the lower end is provided with the flange portion S12c which protrudes outward and extends in the circumferential direction. The flange portion S12c is placed on the first step portion S22a formed in the small diameter wall portion S22 from the upside. In this state, the second split unit S10D is assembled to the container body S2 so as to be detachably positioned thereto (see Fig. 6S). The inclined surface S12d of the lid S12 is provided with the raw water inlets S12D which form a latticed opening and are provided in the circumferential direction with a gap therebetween.

In the second embodiment, the storage portions S11 and S14 of the pair of split units S10C and S10D are connected so as to be disposed in series in the longitudinal direction SY. Further, the raw water passing through the storage portions S11 and S 14 of the split units S10C and S10D flow from the upstream side toward the downstream side in the longitudinal direction SY Accordingly, the raw water can efficiently flow through the filter medium in the storage portions S11 and S14.

The hollow fiber membrane S6 is stored in the second storage portion S 14, and a gap is formed between the hollow fiber membrane S6 and the inner circumferential surface of the second storage portion S14 so as to follow the inner circumferential surface. Further, a gap is also formed between the first storage portion S11 and the container body S2 (the small diameter wall portion S22) and between the second storage portion S14 and the container body S2 (the small diameter wall portion S22). These gaps temporarily store the water purified by the second split unit S10D and hence serve as the purified water passage.

Further, since the pair of split units S10C and S10D is disposed coaxially in the longitudinal direction SY, there is an advantage that an assembly structure for connecting both split units is simple.

In the water purifier of the second aspect of the invention, the first embodiment and the second embodiment have a common point in that the purified water passage is provided between the container body and the storage portion. That is, the water purification cartridge having split units attachable and detachable to and from the container body is provided, and the purified water passage is provided between the container body and the split unit except for the most downstream split unit.

Further, the technical scope of the second aspect of the invention is not limited to the above-described embodiment, and various modifications can be made without departing from the spirit of the invention.

For example, in the first embodiment, the purified water passage S13 is formed between the container body S2 and the bottom wall S11B of the second split unit S10B, and the bottom wall S11B is inclined gradually as it goes from the second split unit S10B toward the first split unit S10A. However, the inclination angle can be appropriately set in accordance with the condition related to the shape and the size of the water purification cartridge S10 and the capacity of the filter medium or the bottom wall may be a horizontal plane without an inclination.

For example, as illustrated in Fig. 7S, the inclination of the bottom wall S11B is larger than that of the first embodiment, and also the bottom wall S23 of the container body S2 is inclined. The bottom wall S23 includes an inclined surface S23a which is gradually inclined downward as it goes toward the first split unit S10A. Accordingly, there is an advantage that the water purified by the second split unit S10B easily flow toward the first split unit S10A along the inclined surface S23a of the container body S2 of the purified water passage.

Further, in the embodiment of the second aspect of the invention, the first split unit S10A (S10C) and the second split unit S10B (S10D) as a pair are used as the water purification cartridge S10 provided inside the water purifier S 1. However, the water purification cartridge S10 is not limited to the pair of split units S10A (S10C) and S10B (S10D), and three or more split units may be provided so as to be connected to each other in the longitudinal direction. Even when three or more split units are provided, the storage portions may be disposed in parallel in the lateral direction SX as in the first embodiment or may be disposed in series in the longitudinal direction SY as in the second embodiment. That is, when the pair of split units is provided, the split units are provided at the left and right sides in the first embodiment and the split units are provided at the upper and lower sides in the second embodiment. When three or more split units are provided, the split units are sequentially provided in the lateral direction in the first embodiment and the split units are sequentially provided in the longitudinal direction in the second embodiment.

Further, the plurality of units integrally connected to each other can be used instead of the plurality of split units detachably connected to each other (see Fig. 8S). Fig. 8S illustrates the gravity filtering type water purification cartridge S10 which includes a bottomed cylindrical storage portion and the ceiling wall portion S12A blocking the opening of the storage portion and in which a plurality of units storing a filter medium is provided inside the storage portion and the plurality of units is disposed in parallel in the lateral direction and the water purifier S1 which includes the water purification cartridge S10. In the water purification cartridge S10, since the storage portions are disposed in parallel in the lateral direction and each ceiling wall portion S12A is provided with the air vent hole S12a, the air vent hole 104 is not needed and the air can be efficiently discharged from each storage portion. Further, since the ceiling wall portion S12A is provided with the air reservoir S12C, it is possible to prevent degradation in filtering speed caused by the air accumulated inside the filter material S5. Further, since the plurality of units is integrally connected to each other, the positions of the units are not displaced from each other, and hence the durability and the reliability are high even during the long-term use. Further, since the water purification cartridge S10 is of a gravity filtering type, the raw water is not pressurized and flows through the water purification cartridge S10. Accordingly, it is possible to maintain the sealing property inside the water purification cartridge S10 at a high level.

Further, in the first embodiment, in the lid S12, the air vent hole S12a and the air reservoir S12C are provided above both the first split unit S10A and the second split unit S10B. However, any one of them may be provided or both of them may be provided above one split unit. That is, the number of the air vent holes S12a and the hole diameter thereof can be appropriately modified, and the capacity (the size) of the air reservoir S12C can be also appropriately modified in accordance with the shape of the lid S12. For example, as illustrated in Fig. 7S, as the shape of the ceiling wall portion S12A of the lid S12, a shape may be used which includes only the top wall surface S12b instead of the inclined surface. In the case of the lid shape, when the raw water inlet S12D is covered by a mesh member, the mesh member is formed while not being curved along the inclined surface S12d, and hence the raw water inlet can be formed without applying a load to the mesh member. Further, since an air reservoir can be formed at the upper portion in the vertical direction, it is possible to prevent air from being accumulated inside the split units S10A and S10B and hence to promptly discharge the purified water.

Further, the configuration related to the sizes, the shapes, and the positions of the water purification cartridge S10 and the container body S2 of the water purifier S1 of the embodiment of the second aspect of the invention can be appropriately modified.

In addition, the component of the above-described embodiment can be appropriately replaced by the existing component without departing from the spirit of the invention, and the modified examples can be appropriately combined.

### (First Embodiment of Third Aspect of Invention)

Hereinafter, a water purification cartridge and a water purifier according to an embodiment of a third aspect of the invention will be described.

The water purifier T1 according to the embodiment illustrated in Fig. 1T includes a container body T2 which includes a raw water storage portion T2A, a water purification cartridge T10 which is detachably provided in the bottom portion of the container body T2, an outer container T3 which includes a purified water storage portion T3A storing the water purified by the water purification cartridge T10, and a container lid T4 which blocks the opening end of the outer container T3.

Here, the center axis of the container body T2 illustrated in Fig. 1T will be referred to as the container axis TO, the opening side of the container body T2 in the direction of the container axis TO will be referred to as the upside, the bottom portion side will be referred to as the downside, a direction orthogonal to the container axis TO will be referred to as the lateral direction TX or the radial direction, a direction following the container axis TO will be referred to as the longitudinal direction TY, and a direction about the container axis TO will be referred to as the circumferential direction.

The outer container T3 is formed in a bottomed cylindrical shape and includes, for example, a circumferential wall T31 formed in a circular or oval shape in the top view and a bottom wall T32. A handle T33 and a spout T34 are integrated with the circumferential wall T31, and the container lid T4 is detachably provided in the opening end of the circumferential wall T31.

In the container lid T4, a portion that covers the spout T34 of the outer container T3 is provided with a pouring portion T4a which is opened toward the outside of the container by the water pressure of the purified water poured out from the inside of the container. The pouring portion rotates about a hinge so that the spout T34 is able to be opened and closed.

The upper end of the container body T2 is opened, and an opening edge is integrated with or separated from an opening end T3a of the outer container T3. Accordingly, the upper end is closed and opened by the container lid T4. The container body T2 includes a large diameter wall portion T21, a small diameter wall portion T22 provided at the lower portion of the large diameter wall portion T21, and a bottom wall T23 blocking the lower end of the small diameter wall portion T22.

An inner circumferential surface of the connection portion between the large diameter wall portion T21 and the small diameter wall portion T22 is provided with a step portion formed by an attachment surface T2a into which a fitting surface T12c of a flange T12C of the water purification cartridge T10 (the second split unit T10B) is press-inserted and a contact portion T2b supporting the flange T12C in a contact state from the downside (see Fig. 6T).

The small diameter wall portion T22 mainly serves as the storage portion of the water purification cartridge T10. The large diameter wall portion T21 forms the raw water storage portion T2A for storing the water which is not purified yet and is injected into the container body T2.

Then, as illustrated in Figs. 2T and 3T, the upper edge of a fitting concave portion T24 is provided with a step portion T24a which extends in the circumferential direction. A flange portion T14c formed in the circumferential surface of the water purification cartridge T10 (the first split unit T10A) is placed on the step portion T24a.

The bottom wall T23 includes the fitting concave portion T24 which protrudes downward. The fitting concave portion T24 is disposed at the side of the spout T34 (see Fig. 1T) of the bottom wall T23 and is formed in a bottomed cylindrical shape. As illustrated in Fig. 2T, the fitting concave portion is a storage portion into which the first split unit T10A is fitted from the upside. With such an arrangement, it is possible to prevent the first split unit T10A from being separated from a first storage portion T14 when the purified water is poured out from the inside of the container. Further, the fitting concave portion T24 includes a circumferential portion T241, a bottom portion T242, and an outlet T243 which is formed at the center portion of the bottom portion T242 so as to penetrate the bottom portion in the thickness direction. The circumferential portion T241 is provided with a groove (not illustrated) formed in the circumferential direction so that an O-ring engages with the groove.

As illustrated in Fig. 1T, the water purification cartridge T10 is separated into the downstream first split unit T10A and the upstream second split unit T10B. The first split unit T10A is assembled while being fitted to the fitting concave portion T24 of the container body T2 (see Fig. 2T), and as illustrated in Fig. 3T, the second split unit T10B is connected to the first split unit T10A from the upside. Then, a first storage portion T14 of the first split unit T10A and a second storage portion T11 of the second split unit T10B are disposed in the lateral direction TX.

As illustrated in Fig. 3T, the split units T10A and T10B with such a configuration can be attached to and detached from each other while moving close to and away from each other in the longitudinal direction TY

As illustrated in Fig. 4T, in the second split unit T10B, the bottomed cylindrical second storage portion T11 storing a filter material (a filter medium) T5 is integrated with a lid T 12 blocking the upper end of the second storage portion T11. Further, the second storage portion T11 and the lid T12 can be formed separately and attached to each other instead of being integrated with each other.

The second storage portion T11 includes a circumferential wall T11A and a bottom wall T11B. The circumferential wall T11A is formed in a size in which the circumferential wall can be disposed in a substantially half area inside the small diameter wall portion T22 (Fig. 1T) in the top view.

The bottom wall T11B is provided with a mesh-shaped flow hole through which the filter medium does not pass, and is gradually inclined downward as it goes away from the first split unit T10A in the lateral direction TX. Furthermore, the bottom wall T11B may be formed horizontal while not being inclined. Further, a non-woven fabric or a woven fabric can be used instead of the flow hole of the bottom wall T11B.

The inclination angle of the bottom wall T11B can be arbitrarily set. However, an inclined surface of 1° to 10° is desirable and an inclined surface of 2° to 8° or an inclined surface of 1° to 5° is more desirable. When the inclination is smaller than 1°, the air inside the split unit T10A does not easily come out upward and hence the filtering speed decreases. When the inclination is larger than 10°, a position in which water is not dispersed is formed in the filter medium, and hence the water purification performance cannot be sufficiently exhibited.

As illustrated in Fig. 1T, a purified water passage T13 which causes the purified water to flow from the second storage portion T11 toward the first storage portion T 14 (to be described later) of the first split unit T10A is formed between the bottom wall T11B of the second storage portion T11 and the bottom wall T23 of the container body T2 below the second split unit T10B.

The lid T12 is formed so as to block the upper end opening of the small diameter wall portion T22 of the container body T2. Accordingly, the openings of the second storage portion T11 and the first storage portion T 14 are also covered. As illustrated in Fig. 4T, the ceiling wall portion T12A of the lid T12 is provided with an air reservoir T12D which includes a plurality of air vent holes (not illustrated) and an air storage area formed at the inner top portion. Further, the lid T12 is provided with a handle T12E which is gripped by a finger when the second split unit T10B is attached to and detached from the container body T2.

The air vent holes are formed so as to cause the second storage portion T11 of the second split unit T10B and the first storage portion T14 (to be described later) of the first split unit T10A to communicate with the raw water storage portion T2A inside the container body T2.

Further, the shape of the hole diameter of the air vent hole is appropriately set in balance so that the raw water stored in the raw water storage portion T2A does not flow therethrough and only the air generated from the filter material T5 of the second storage portion T11 is discharged from the second storage portion T11 toward the raw water storage portion T2A so that air is not replaced by water. Specifically, for example, the air vent hole disclosed in Patent Document (see Japanese Patent No. 4131821) can be employed.

In a circumferential wall cylinder T12B of the lid T12, a plurality of raw water inlets T12F which forms a latticed opening and through which the raw water inside the raw water storage portion T2A flows into the second storage portion T11 is formed in an area near the second storage portion T11 so as to be separated from each other in the circumferential direction. The raw water inlet T12F is covered by a mesh member.

Further, the circumferential wall cylinder T12B of the lid T12 is provided with the flange T12C (the side wall) which includes the fitting surface T12c intersecting the radial direction orthogonal to the container axis TO and extends in the circumferential direction. As illustrated in Fig. 5T, the fitting surface T12c is provided with a sealing protrusion T17 which protrudes outward in the radial direction. A thinned portion (not illustrated) is formed at the inside of the flange T12C in the radial direction.

As illustrated in Fig. 6T, the sealing protrusion T17 liquid-tightly contacts the attachment surface T2a while the flange T12C is brought into contact with the contact portion T2b of the container body T2 and the fitting surface T12c is press-inserted into the attachment surface T2a. Here, the protrusion length of the sealing protrusion T17 is desirably equal to or larger than 0.2 mm and equal to or smaller than 5.0 mm and more desirably equal to or larger than 0.3 mm and equal to or smaller than 2.0 mm. Further, the protrusion length may be set in the range of 0.5 to 1.0 mm.

Further, the sealing protrusion T17 has a different protrusion length in the circumferential direction. For example, the sealing protrusion T17 is formed in an unevenness shape while changing in the circumferential direction in the range of 0.2 to 5.0 mm. In addition, the sealing protrusion T17 may have a steady protrusion length in the circumferential direction.

Further, as the material of the attachment surface T2a, acryl, nylon, polycarbonate, and the like can be exemplified. Then, as the materials of the flange T12C and the sealing protrusion T17, for example, polyethylene, polypropylene, soft polyvinyl chloride, ABS resin, and the like can be exemplified. These resins are softer than the rigidity of the container body 2. In this way, when the flange T12C is press-inserted into the container body T2, the sealing protrusion T17 liquid-tightly contacts the attachment surface T2a of the container body T2. Further, only the sealing protrusion T 17 may be formed of the above-described resin.

As illustrated in Figs. 2T and 3T, the first split unit T10A includes the cylindrical first storage portion T14 which stores a hollow fiber membrane T6 (a porous filter membrane) forming a filter medium and includes an upper end opening formed at the upper end side in the container axis TO and a bottom member T15 which is provided in the bottom portion of the first storage portion T14 and includes a purified water outlet T15a allowing the passage of the purified water.

The circumferential surface of the first storage portion T14 is provided with a plurality of openings T14b in the longitudinal direction TY and the circumferential direction. Since the plurality of openings T14b is provided, water flows into the hollow fiber membrane T6 from many directions and hence pressure loss is degraded. Further, it is possible to evenly use the hollow fiber membrane T6. The lower end portion of the first storage portion T14 communicates with the purified water passage T13 (Fig. 1T). The lower end circumferential surface of the first storage portion T14 is provided with the flange portion T14c which protrudes outward and extends in the circumferential direction. Here, the first storage portion is assembled so as to be detachably positioned to the container body T2 while the flange portion T14c is placed on the step portion T24a provided in the fitting concave portion T24 from the upside.

As illustrated in Fig. 1T, a gap is formed between the hollow fiber membrane T6 and the inner circumferential surface of the first storage portion T14. Further, a gap for storing water to be filtered is formed between the first storage portion T14 and the container body T2 (the small diameter wall portion T22). The gap serves as a passage through which the water purified by the second split unit T10B, passing through the purified water passage T13, and flowing into the first storage portion T14 flows toward the upper end side of the hollow fiber membrane T6.

Here, the filter material T5 stored in the second split unit T10B is formed by absorbent. As the absorbent, powdered absorbent, granular absorbent formed by the powdered absorbent, fibrous absorbent, and the like are exemplified.

As specific absorbent, powdered absorbent, granular absorbent formed by the powdered absorbent, fibrous absorbent, and the like are exemplified. As such absorbent, for example, inorganic absorbent such as natural absorbent (natural zeolite, silver zeolite, acid white clay, and the like) and synthetic absorbent (synthetic zeolite, bacterial adsorption polymer, hydroxyapatite, molecular sieve, silica gel, silica alumina gel absorbent, porous glass, titanium silicate, and the like) and organic absorbent such as powdered activated charcoal, granular activated charcoal, fibrous activated charcoal, block-shaped activated charcoal, extruded activated charcoal, molded activated charcoal, polymer adsorption resin, synthetic granular activated charcoal, synthetic fibrous activated charcoal, ion exchange resin (cation exchange resin and anion exchange resin), ion exchange fiber, chelate resin, chelate fiber, high-absorption resin, high-absorption fiber, oil absorbing resin, and oil absorbent are exemplified. Among these, antibacterial silver-impregnated activated charcoal is desirable. Particularly, in the case of the granular absorbent, it is desirable that the particle size distribution be 200 to 1700 µm. When the particle size is small, the water passing resistance increase and the flow rate decreases. When the particle size is large, the surface area decreases and the removing performance is degraded. Among these, granular absorbent including silver added activated charcoal is desirable in consideration of adsorptivity.

Further, as the hollow fiber membrane T6 stored in the first split unit T10A, a hollow fiber membrane appropriately used to filter and remove granular materials including a microorganism and bacteria and having a size of 0.1 µm or more can be used.

As the hollow fiber membrane T6, various porous or tubular hollow fiber membranes can be used. For example, various materials such as cellulose, polyolefin (polyethylene, polypropylene), polyvinyl alcohol, ethylene-vinyl alcohol copolymer, polyether, polymethylmethacrylate (PMMA), polysulfone, polyacrylonitrile, polytetrafluoroethylen, polyvinylidene fluoride (PVDF), polycarbonate, polyester, polyamide, and aromatic polyamide can be used.

Among these, when the treatment or the working characteristic of the hollow fiber membrane is considered, a hollow fiber membrane formed of polyolefin such as polyethylene or polypropylene is desirable.

According to the water purification cartridge and the water purifier of the embodiment, an action and an effect are obtained as below.

As illustrated in Fig. 1T, in the water purifier T1, when the raw water is supplied to the raw water storage portion T2A of the container body T2, the raw water is introduced from the raw water inlet T12F provided in the lid T12 of the second split unit T10B into the second storage portion T11 of the second split unit T10B by the own weight. Then, when the raw water passes through the filter material T5 provided inside the second storage portion T11, chemical substance such as chlorine, trihalomethane, and agricultural chemical and heavy metal such as soluble lead are adsorbed to the filter material so as to be removed.

Then, the water purified while passing through the filter material T5 flows from the flow hole of the bottom wall T11B toward the downside of the second split unit T10B, passes from the purified water passage T13 to the opening T14b, and is introduced into the first storage portion T14 of the first split unit T10A. Then, the water which passes through the first storage portion T14 is purified so that bacteria, a microorganism, or suspended substance are filtered by the hollow fiber membrane T6. Then, the water purified by the water purification cartridges T10A and T10B flows from the outlet T243 of the container body T2 toward the outside of the container body T2 through the purified water outlet T15a of the first split unit T10A and is stored inside the purified water storage portion T3A of the outer container T3.

In this way, in the embodiment, as illustrated in Fig. 6T, when the flange T12C of the water purification cartridge T10 (the second split unit T10B) is brought into contact with the contact portion T2b of the container body T2 so that the fitting surface T12c is press-inserted into the attachment surface T2a, the fitting surface T12c comes into close contact with the attachment surface T2a, and the sealing protrusion T17 liquid-tightly contacts the attachment surface T2a, thereby realizing a double seal structure. That is, when the second split unit T10B is fitted to the container body T2 and the fitting surface T12c is press-inserted into the attachment surface T2a downward, the sealing protrusion T17 is curled upward and the flange T12C is crushed by the contact portion T2b from the downside. Accordingly, a fitting gap TS therebetween is removed and hence a liquid-tight sealed state is obtained. At this time, the flange T12C also comes into close contact with the contact portion T2b while the sealing protrusion T17 is nipped therebetween. Further, Fig. 6T illustrates a state in which the fitting gap TS is formed for the comprehension of the drawing. However, the attachment surface T2a and the fitting surface T12c of the flange T12C come into close contact with each other without any gap in the fitted state.

In this way, in the embodiment, since the fitting gap TS caused by the manufacturing error formed between the fitting surface T12c of the flange T12C and the attachment surface T2a of the container body T2 can be reliably removed by the sealing protrusion T17, the leakage between the container body T2 and the water purification cartridge T10 can be prevented. For that reason, the leakage can be reliably prevented even when the fitting shape is different from the circular shape.

Further, in the embodiment, the sealing protrusion T17 is nipped between the fitting surface T12c and the attachment surface T2a while being curled upward in the fitted state. That is, since the flange T12C is press-inserted while the sealing protrusion T 17 is nipped between the attachment surface T2a and the fitting surface, it is possible to decrease the attachment and detachment torque of the water purification cartridge T10 with respect to the container body T2 and hence to easily perform the attachment and detachment.

Further, since a sealing member such as a packing or an O-ring is not used in the fitting portion between the container body 2 and the water purification cartridge T10, it is possible to prevent the raw water from flowing toward the downstream side due to the separation or the erroneous attachment of the sealing member.

Additionally, since the sealing member is not used in the fitting portion between the container body T2 and the water purification cartridge T10, a decrease in cost can be decreased.

In addition, in the embodiment, since the sealing protrusion T17 is provided in the fitting surface T12c of the flange T12C and the attachment and the detachment of the water purification cartridge T10 can be repeated, it is possible to decrease the running cost without replacing the sealing member.

Further, in the embodiment, since the sealing protrusion T17 is formed in an unevenness shape while the protrusion length changes in the circumferential direction, the protrusion length changes in the circumferential direction while the sealing protrusion T 17 is curled upward and the water purification cartridge T10 is fitted to the container body T2. For that reason, since the water purification cartridge T10 (the first split unit T10B) fitted to the container body moves up and down, the water purification cartridge can be easily separated from the container body without applying any force.

Further, in the embodiment, since the flange T12C is easily and elastically deformed due to the thin thickness, there is an advantage that the adhesion of the sealing protrusion T17 with respect to the attachment surface T2a can be improved and the attachment and the detachment of the water purification cartridge T10 can be easily performed.

In this way, in the water purification cartridge and the water purifier of the embodiment, it is possible to improve the adhesion between the container body T2 and the water purification cartridge T10 at low cost and to easily perform the attachment and the detachment of the water purification cartridge T10. Accordingly, it is possible to improve the operability.

Next, a water purification cartridge and a water purifier according to another embodiment of the third aspect of the invention will be described with reference to the accompanying drawings. Here, the same reference numeral will be given to the same or equivalent component as or to the first embodiment, the repetitive description thereof will be omitted, and only the difference from the first embodiment will be described.

### (Second Embodiment of Third Aspect of Invention)

As illustrated in Fig. 7T, a water purifier according to a second embodiment is obtained by assembling the water purification cartridge T10 in which the storage portions T11 and T14 of a pair of split units T10C and T10D are disposed in the longitudinal direction TY to the container body T2. That is, since the lower first split unit T10C is assembled to the fitting concave portion T24 of the container body T2 and the upper second split unit T10D is fitted to the attachment surface T2a formed in the upper end of the small diameter wall portion T22, the second split unit T10D is connected to the first split unit T10C from the upside.

The small diameter wall portion T22 has a cross-sectional shape capable of storing the first split unit T10C, and is provided so as to be coaxial with the container axis TO.

Here, since the basic configuration of the pair of split units T10C and T10D is similar to that of the first embodiment, only difference will be described in detail.

The lid T12 is formed so that a lower end of an inclined surface T12d is continuous to an upper edge of the circumferential wall T11A. The inclined surface T12d of the lid T12 is provided with the raw water inlets T12F forming a latticed opening and separated from each other in the circumferential direction.

As illustrated in Fig. 8T, in the second split unit T10D, the upper end portion of the circumferential wall T11A is provided with a flange T11C (a side wall) which includes a fitting surface T11a intersecting the radial direction orthogonal to the container axis TO (Fig. 7T) and extending in the circumferential direction. The fitting surface T11a is provided with the sealing protrusion T17 which protrudes outward in the radial direction. While the flange T11C is brought into contact with the contact portion T2b of the container body T2 and the fitting surface T11a is press-inserted into the attachment surface T2a, the sealing protrusion T17 liquid-tightly contacts the attachment surface T2a.

As the material of the flange T11C and the sealing protrusion T17 according to the second embodiment, resin softer than the rigidity of the container body T2 can be exemplified as in the first embodiment.

In this way, in the second embodiment, as illustrated in Fig. 7T, since the storage portions T11 and T14 of the pair of split units T10C and T10D are disposed in the longitudinal direction TY and the purified water passing through the storage portions T11 and T14 flows from the upstream side toward the downstream side in the longitudinal direction TY, it is possible to cause the raw water to efficiently pass through the filter medium inside the storage portions T11 and T14.

Then, even in the second embodiment, as illustrated in Fig. 8T, the sealing protrusion T 17 provided in the flange T11C can be fitted to the attachment surface T2a of the container body T2 in a liquid-tight contact state. For that reason, as in the first embodiment, it is possible to improve the adhesion between the container body T2 and the water purification cartridge T10 at low cost and to easily perform the attachment and the detachment of the water purification cartridge T10. Accordingly, it is possible to improve the operability.

Further, the technical scope of the third aspect of the invention is not limited to the above-described embodiment, and various modifications can be made without departing from the spirit of the invention.

For example, in the above-described embodiment, the water purification cartridge T10 provided inside the water purifier T1 is separated into the first split unit T10A (T10C) and the second split unit T10B (T10D), but the invention is not limited to the separated structure. For example, an integrated water purification cartridge can be used as an application target.

Further, the configuration related to the sizes, the shapes, and the positions of the water purification cartridge T10 and the container body T2 of the water purifier T1 of the embodiment of the third aspect of the invention can be appropriately modified.

In addition, the component of the above-described embodiment can be appropriately replaced by the existing component without departing from the spirit of the invention, and the modified examples can be appropriately combined.

### EXPLANATIONS OF LETTERS OR NUMERALS

1, 1A, 1B: water purifier
2: container body
2A: raw water storage portion
2a: purified water outlet
3: hollow fiber membrane (filter medium)
4: passage portion
5: filter material (filter medium)
6: purified water storage portion
10, 10': water purification cartridge
10A: first single cartridge
10B: second single cartridge
11, 16: casing body
11C, 16A: storage portion
12, 17: lid
12A, 17A: ceiling wall portion
12C, 17C: air reservoir
12c, 17c: air vent hole
13: partition member
14: female passage
15: raw water inlet
18: bottom member
19: male passage tube
O: container axis
X: connection direction

S1: water purifier
S2: container body
S2A: raw water storage portion
S3: outer container
S3A: purified water storage portion
S4: container lid
S5: filter material (filter medium)
S6: hollow fiber membrane (filter medium)
S10: water purification cartridge
S10A, S10C: first split unit
S10B, S10D: second split unit
S11: first storage portion
S11A: circumferential wall
S11B: bottom wall
S12: lid
S12A: ceiling wall portion
S12C: air reservoir
S 12D: raw water inlet
S12a: air vent hole
S12d: inclined surface
S 13: purified water passage
S14: second storage portion
S15 : bottom member
S23: bottom wall of container body
SN: storage portion
SO: container axis
SX: lateral direction
SY: longitudinal direction

T1: water purifier
T2: container body
T2a: attachment surface
T2b: contact portion
T2A: raw water storage portion
T3: outer container
T3A: purified water storage portion
T4: container lid
T10: water purification cartridge
T10A,10C: first split unit
T10B, 10D: second split unit
T11: second storage portion
T11a: fitting surface
T11A: circumferential wall
T11B: bottom wall
T11C: flange (side wall)
T12: lid
T12c: fitting surface
T12A: ceiling wall portion
T12B: circumferential wall cylinder
T12C: flange (side wall)
T12D: air reservoir
T12F: raw water inlet
T 14: first storage portion
T 17: sealing protrusion
T23: bottom wall of container body
TO: container axis
TX: lateral direction
TY: longitudinal direction

## Claims

1. A water purification cartridge detachably provided inside a water purifier comprising:
a plurality of single cartridges, each of which includes a bottomed cylindrical casing body; and
one or more ceiling wall portions which block upper end openings of the plurality of single cartridges,
wherein the inside of the plurality of single cartridges becomes a filter medium storage portion, and
wherein the plurality of single cartridges is disposed in the lateral direction and is detachably connected to each other.

2. The water purification cartridge according to claim 1,
wherein at least one single cartridge is provided with an air reservoir at an inner surface side of the ceiling wall portion.

3. The water purification cartridge according to claim 1 or 2,
wherein the ceiling wall portion of at least one single cartridge is provided with an air vent hole.

4. The water purification cartridge according to any one of claims 1 to 3,
wherein each of the plurality of single cartridges is provided with the ceiling wall portion and one of the single cartridges connected to each other is provided with a pair of locking pieces nipping the other single cartridge in the left and right direction orthogonal to the connection direction.

5. The water purification cartridge according to any one of claims 1 to 4,
wherein a bottom surface of at least one single cartridge excluding the single cartridge located at the most downstream side among the plurality of single cartridges is gradually inclined upward as it goes toward the downstream single cartridge.

6. A water purifier comprising:
a container body; and
the water purification cartridge according to any one of claims 1 to 5,
wherein the water purification cartridge is detachably stored in the container body, and
wherein a passage for water flowing between single cartridges is formed between the container body and a bottom surface of the other single cartridge excluding the single cartridge located at the most downstream side among the plurality of single cartridges.

7. The water purifier according to claim 5,
wherein the container body includes a raw water storage portion, the water purification cartridge is detachably stored in the raw water storage portion, and one or more passages for water flowing between the single cartridges are formed between the raw water storage portion and the bottom surface of the other single cartridge excluding the single cartridge located at the most downstream side among the plurality of single cartridges.

8. A gravity filtering type water purification cartridge comprising:
a bottomed cylindrical storage portion; and
a ceiling wall portion which blocks an opening of the storage portion,
wherein a plurality of units storing a filter medium is provided inside the storage portion, and
wherein the plurality of units is disposed in parallel in the lateral direction.

9. The water purification cartridge according to claim 8,
wherein the water purification cartridge is detachably provided inside a water purifier, and
wherein the plurality of units is split units detachably connected to each other.

10. The water purification cartridge according to claim 8 or 9,
wherein an air reservoir is provided at an inner surface side of the ceiling wall portion.

11. The water purification cartridge according to any one of claims 8 to 10,
wherein the ceiling wall portion is provided with an air vent hole.

12. The water purification cartridge according to any one of claims 8 to 11,
wherein a bottom surface of at least one other unit excluding the unit located at the most downstream side among the plurality of units is inclined upward as it goes toward the downstream unit.

13. A water purifier comprising:
a container body; and
the water purification cartridge according to any one of claims 8 to 12,
wherein the water purification cartridge is detachably stored in the container body, and
wherein at least one or more purified water passages for the water purified by the other unit are formed between the container body and the other unit excluding the unit located at the most downstream side among the plurality of units.

14. The water purifier according to claim 13,
wherein the container body includes a raw water storage portion, the water purification cartridge is detachably stored in the raw water storage portion, and at least one or more purified water passages are formed between the raw water storage portion and the other unit excluding the unit located at the most downstream side among the plurality of units.

15. A water purification cartridge detachably provided in a water purifier comprising:
a raw water inlet; and
a sealing protrusion which protrudes outward in the radial direction orthogonal to the axial direction as the attachment/detachment direction,
wherein the sealing protrusion is provided at a downstream side wall in relation to the raw water inlet.

16. The water purification cartridge according to claim 15,
wherein the side wall includes a fitting surface fitted to a container body of the water purifier, and the sealing protrusion is provided in the fitting surface.

17. The water purification cartridge according to claim 15 or 16,
wherein the sealing protrusion is provided throughout the side wall.

18. The water purification cartridge according to any one of claims 15 to 17,
wherein the sealing protrusion has a portion having a different protrusion length in the circumferential direction.

19. The water purification cartridge according to any one of claims 15 to 18,
wherein the side wall is provided with a thinned portion at the inside in the radial direction.

20. A water purifier comprising:
the water purification cartridge according to any one of claims 15 to 19; and
a container body to which the water purification cartridge is attachable.

21. The water purifier according to claim 20,
wherein the water purification cartridge is attachable to and detachable from the container body in the up and down direction,
wherein the container body is provided with an attachment surface to which a fitting surface of the side wall fitted to the container body is press-inserted and a contact portion which contacts and supports the side wall from the downside, and
wherein the sealing protrusion liquid-tightly contacts the attachment surface while the side wall is brought into contact with the contact portion so that the fitting surface is press-inserted into the attachment surface.
